# EUROPÄISCHE PATENTSCHRIFT

(11) **EP 3 019 330 B1**
(45) Veröffentlichungstag und Bekanntmachung des Hinweises auf die Patenterteilung: **04.07.2018**
(21) Anmeldenummer: 14737133.0
(22) Anmeldetag: 15.05.2014
(51) Int. Cl.: B29C 70/50, B29C 70/52, C08J 3/24, B29C 41/30, E04C 5/07, B29L 31/00

(54) **VERFAHREN ZUR HERSTELLUNG EINES BEWEHRUNGSSTABES**
METHOD FOR PRODUCING A REINFORCEMENT ROD
PROCÉDÉ DE FABRICATION D'UNE BARRE D'ARMATURE

(30) Priorität: 17.05.2013 AT 503382013
(43) Veröffentlichungstag der Anmeldung: 18.05.2016
(73) Patentinhaber: ASA.TEC GmbH, A-3550 Langenlois (AT)
(72) Erfinder: SCHINKINGER, Thomas, 4072 Alkoven (AT)
(74) Vertreter: Burger, Hannes
(86) Internationale Anmeldenummer: PCT/AT2014/050119
(87) Internationale Veröffentlichungsnummer: WO 2014/183146

(56) Entgegenhaltungen:
- EP-A2- 0 798 321
- WO-A1-94/21455
- WO-A1-95/22437
- US-A- 5 217 654

## Beschreibung

Die Erfindung betrifft ein Verfahren zur Herstellung eines Bewehrungsstabes aus einem Faserverbundwerkstoff aus endlosen Mineralfasern und zumindest einem Harz, wobei zumindest ein Teil der Mineralfasern mit einem Harz-Härter-Gemisch versetzt wird und danach die mit dem Harz-Härter-Gemisch versetzten Mineralfasern und gegebenenfalls harzfreien Mineralfasern zu einem Stab zusammengeführt werden und das Harz gehärtet wird, sowie die Verwendung eines Harz-Härter-Gemisches umfassend zumindest ein Harz und zumindest zwei unterschiedliche Härter zur Herstellung eines Bewehrungsstabes aus Mineralfasern.

Bewehrungsstäbe zur Armierung von Beton werden Großteils aus Metall, insbesondere Stahl, hergestellt. Es gibt daneben aber bereits einen umfassenden Einsatz von Verbundwerkstoffen als Bewehrungswerkstoffe als Ersatz für Metallbewehrungsstäbe. Insbesondere handelt es sich dabei um faserverstärkte Kunststoffe.

So beschreiben z.B. die EP 0 667 228 A1 und die EP 0 733 465 A1 ein Pultrusionsverfahren zur Herstellung eines glasfaserverstärkten Bewehrungsstabes aus einem synthetischen Harz, das die Matrix für die Glasfasern bildet. Zur Herstellung der Rippen an der äußeren Oberfläche des Bewehrungsstabes wird dabei vor dem Härten des Harzes ein Streifen um die mit dem Harz versetzten Glasfasern gewickelt, danach das Harz gehärtet und anschließen der Streifen wieder entfernt.

Das Pultrusionsverfahren an sich ist aus dem Stand der Technik bekannt. Grundsätzlich unterscheidet man das so genannte offene Verfahren und das geschlossene Verfahren.

Beim offenen Verfahren werden die Verstärkungsfasern über eine Tauchwalze von ihren Stelllagen in eine Harzwanne geführt. Ein Kadiergitter sorgt für die gewünschte Verteilung der Fasern im späteren Profil. Diese werden in einer Harzwanne mit Kunstharz getränkt und durchlaufen mehrere Vorformstationen, die das Faserharzgemisch immer näher an die gewünschte, endgültige Form heranführen. Im Unterschied zum geschlossenen Verfahren erfolgt die Aushärtung des Pultrudats auf offener Strecke.

Neben der Verwendung eines Streifens zur Herstellung der Rippen ist aus dem Stand der Technik auch bekannt, dass die Rippen nach dem Aushärten des Harzes in den Stab gefräst werden.

Die WO 1994/21455 A1 beschreibt ein Verfahren zur Herstellung eines Bewehrungsfadens aus endlosen Glasfasern und einem Harz, wobei die Glasfasern mit einem Harz-Härter Gemisch versetzt werden, das die folgen Komponenten umfasst: ein Polyepoxid-Harz; ein Polyacrylat, das eine reaktive Spezies zur Härtung des Harzes bildet, wenn es einer UV-Strahlung ausgesetzt wird; und ein organisches Peroxyd, das eine reaktive Spezies zur Härtung des Harzes bildet, wenn es geheizt wird. Die auf diese Weise hergestellten Fäden werden um einen Stab gewickelt, damit ein Stab aus einem Faserverbundstoff aus endlosen Mineralfern und zumindest einem Harz hergestellt wird.

Die WO 1995/22437 A1 offenbart die Herstellung von Bewehrungsfasern aus endlosen Glasfasern bzw. -filamenten mit verbesserter Zugfestigkeit.

Die EP 0 798 321 A2 offenbart eine Harzzusammensetzung mit Fasern, wobei das Harz teilweise gehärtet wird um ein Prepreg zu bilden, in Position gebracht und ausgehärtet wird.

Die Aufgabe vorliegender Erfindung ist die Schaffung eines verbesserten Bewehrungsstabes.

Diese Aufgabe wird einerseits mit dem eingangs genannten Verfahren und andererseits durch die eingangs genannte Verwendung gelöst, wobei nach dem Verfahren vorgesehen ist, dass als Harz-Härter-Gemisch ein Gemisch aus zumindest einem Harz und zumindest zwei unterschiedlichen Härtern verwendet wird, wobei die beiden Härter bei unterschiedlichen Bedingungen reaktive Spezies zur Härtung des Harzes bilden, sodass die reaktiven Spezies zu unterschiedlichen Zeitpunkten für die Härtung zur Verfügung stehen und aus den Mineralfasern und dem Harz ein Kernstab hergestellt wird, der in weiterer Folge mit einem Randlaminat aus Mineralfasern und einem weiteren Harz versehen wird, wobei für die Herstellung des Kernstabes ein zur Herstellung des Randlaminats unterschiedliches Härtersystem verwendet wird, insbesondere ein Härter weniger eingesetzt wird, als in der Harz-Härter-Mischung für die Herstellung des Randlaminats, und bei der Verwendung vorgesehen ist, dass die beiden Härter bei unterschiedlichen Bedingungen reaktive Spezies zur Härtung des Harzes bilden, sodass die reaktiven Spezies zu unterschiedlichen Zeitpunkten für die Härtung zur Verfügung stehen und aus den Mineralfasern und dem Harz ein Kernstab hergestellt wird, der in weiterer Folge mit einem Randlaminat aus Mineralfasern und einem weiteren Harz versehen wird, wobei für die Herstellung des Kernstabes ein zur Herstellung des Randlaminats unterschiedliches Härtersystem verwendet wird, insbesondere ein Härter weniger eingesetzt wird, als in der Harz-Härter-Mischung für die Herstellung des Randlaminats.

Von Vorteil ist dabei, dass durch die zeitliche Staffelung der Erzeugung der reaktiven Spezies aus den Härtern die Gesamtzeit der Härtung bzw. Vernetzung des Harzes verlängert wird, sodass durch die bei Reaktion frei werdende Reaktionswärme nicht zu einer "Überhitzung" des Bewehrungsstabes führt. Es kann damit einer möglichen Schädigung des Bewehrungsstabes, insbesondere durch Rissbildung besser vorgebeugt werden bzw. diese vermieden werden.

Vorzugsweise sind die Härter ausgewählt aus der Gruppe der Radikalbildner, wie z.B. Peroxide, Azoverbindungen, Fotoinitiatoren, sowie Mischungen daraus. Es ist damit eine einfache Härtung durch Temperaturerhöhung möglich, d.h. dass die Bildung der reaktiven Spezies durch Temperaturerhöhung gestartet wird. Es wird damit auch auf einfache Weise die Steuerung der Härtung ermöglicht, indem die Härter bei einer unterschiedlichen Temperatur die jeweiligen reaktiven Spezies bilden. Zudem kann die frei werdende Reaktionswärme für die Reaktion genutzt werden, sodass der notwendige Energiebedarf gesenkt werden kann.

Vorzugsweise werden als Härter drei verschiedene Peroxide verwendet, da damit die voranstehend genannten Effekte weiter verbessert werden.

Um ein zu rasches Starten der Vernetzungsreaktion des Harzes zu vermeiden kann vorgesehen sein, dass der Härter, der zuerst die reaktiven Spezies bildet, in einem Mengenanteil eingesetzt wird, der bezogen auf die jeweiligen Mengenanteile der weiteren Härter des Harz-Härter Gemisches am geringsten ist.

Vorteilhaft erweist sich, dass aus den Mineralfasern und dem Harz ein Kernstab hergestellt wird, der in weiterer Folge mit einem Randlaminat aus Mineralfasern und Harz versehen wird, wobei für die Herstellung des Kernstabes ein zur Herstellung des Randlaminats unterschiedliches Härtersystem verwendet wird, insbesondere ein Härter weniger eingesetzt wird, als in der Harz-Härter-Mischung für die Herstellung des Randlaminats. Durch die Aufteilung Kernstab und Randlaminat wird für die Herstellung der Oberflächenstruktur des Bewehrungsstabes eine eigene Mineralfaser/Harz-Lage bereitgestellt. Es wird damit erreicht, dass die Mineralfasern im Kernstab zumindest im Wesentlichen ungestört vorliegen, also durch das nachträgliche Umwickeln des Randlaminats vor der Härtung mit einem Faden zur Ausbildung einer rillenartigen Struktur keine bzw. nur in oberflächennahen Bereichen des Kernstabes eine Ondulierung der Mineralfasern auftritt. Es kann damit der Kraftfluss im Kernstab entsprechend verbessert werden. Dabei kann durch die unterschiedlichen Härtermischungen, insbesondere durch die Verwendung eines Härtergemisches mit einem Härter weniger für die Vernetzung des Kernstabes, erreicht werden, dass die Vernetzung des Harzes zur Bildung des Kernstabes vor dem Aufbringen des Randlaminats auf den Kernstab nicht vollständig vernetzt wird. Dadurch stehen für die Vernetzung des Kernstabharzes noch Vernetzungsstellen für die Vernetzung mit dem Randlaminatharz zur Verfügung, wodurch eine höhere Bindefestigkeit zwischen Kernstab und Randlaminat erreicht wird.

Zum besseren Verständnis der Erfindung wird diese anhand der nachfolgenden Figuren näher erläutert.

Es zeigen jeweils in schematisch vereinfachter Darstellung:
- Fig. 1: eine Ausführungsvariante einer Anlage zur Herstellung eines Bewehrungsstabes;
- Fig. 2: einen Querschnitt durch einen Bewehrungsstab;
- Fig. 3: eine Abstreifvorrichtung in Ansicht von vorne;
- Fig. 4: einen Ausschnitt aus einem Bewehrungsstab in Seitenansicht geschnitten.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

Vorab sei festgehalten, dass unter einem Bewehrungsstab ein Stab verstanden wird, der zu Armierungszwecken in eine Matrix aus einem zum Bewehrungsstab unterschiedlichen Material eingebettet wird, um diesem Material verbesserte mechanische Eigenschaften zu verleihen, insbesondere eine höhere Zugfestigkeit und/oder höhere Druckfestigkeit und/oder höhere Schubfestigkeit. Bevorzugt wird der Bewehrungsstab zur Armierung von Beton verwendet. Der Bewehrungsstab kann auch mechanisch vorgespannt in das zu verstärkende Material eingebettet werden.

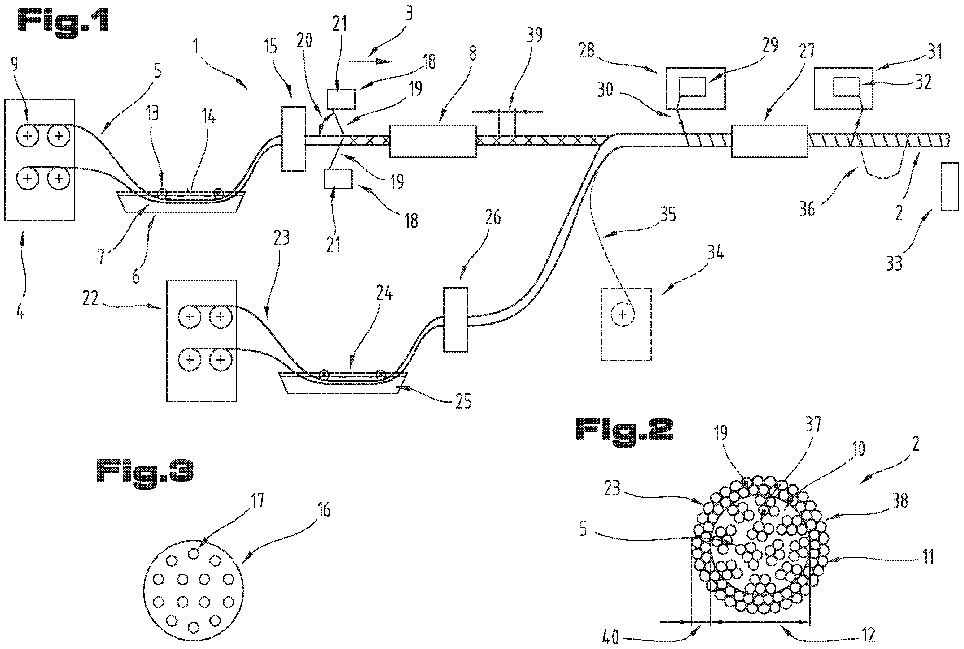

In Fig. 1 ist die bevorzugte Ausführungsvariante einer Anlage 1 zur Herstellung eines Bewehrungsstabes 2 dargestellt. Die Anlage 1 ist in Art einer offenen Pultrusionsanlage bzw. Pullwindinganlage ausgeführt.

Die Anlage 1 umfasst in Produktionsrichtung gemäß Pfeil 3 hintereinander angeordnet eine Einrichtung 4 zur Bereitstellung von endlosen Mineralfasern 5, eine Einrichtung 6 zur Versetzung der Mineralfasern 5 mit einem Harz 7, durch welche die Mineralfasern 5 gefördert werden, und eine Einrichtung 8 zur Härtung des Harzes 7.

Eine Mineralfaser im Sinne der Erfindung ist ein Roving, der aus einem Bündel, Strang oder Multifilamentgarn aus insbesondere parallel angeordneten Filamenten besteht.

Als endlose Mineralfasern 5 werden vorzugsweise Vulkanitfasern, insbesondere Basaltfasern bzw. Andesitfasern, eingesetzt. Es ist jedoch auch ein zumindest teilweiser Ersatz der Vulkanitfasern, insbesondere Basaltfasern bzw. Andesitfasern, durch andere Fasern, insbesondere Glasfasern und/oder Carbonfasern möglich. Mit "zumindest teilweise" ist dabei gemeint, dass der Anteil an den zu Vulkanitfasern, insbesondere Basaltfasern bzw. Andesitfasern, unterschiedlichen Fasern zwischen 5 Gew.-% bis 100 Gew.-% beträgt. Es können auch Mischungen aus Glas- und Carbonfasern eingesetzt werden, wobei in diesem Fall der Carbonfaseranteil, bezogen auf die Gesamtmenge an Glas- und Carbonfasern, zwischen 20 Gew.-% und 80 Gew.-% betragen kann.

Der Begriff "endlos" hinsichtlich der Mineralfasern 5 wird der technischen Terminologie für Fasern entsprechend verwendet. Dementsprechend weisen Endlosfasern eine Länge von mindestens einem Meter auf. Es handelt sich also nicht um Kurz- oder Langfasern.

Die endlosen Mineralfasern 5 werden insbesondere im Schmelzspinnverfahren hergestellt.

Im Folgenden wird nur mehr der Begriff "Mineralfaser 5" verwendet. Es ist dabei der Begriff "endlos" mitzulesen.

Ein erster Teil der Mineralfasern 5 wird in der Einrichtung 4 zur Bereitstellung von endlosen Mineralfasern 5 für das Verfahren zur Herstellung des Bewehrungsstabes 2 bereitgestellt. Diese Einrichtung 4 zur Bereitstellung von endlosen Mineralfasern 5 ist insbesondere als Spulengatter ausgebildet. In dem Spulengatter ist ein entsprechende Anzahl an Spulen 9 drehbar oder stehend, d.h. nicht drehbar, gelagert angeordnet. Bei der drehbaren Anordnung der Spulen 9 erfolgt der Abzug der Mineralfasern 5 von außen, bei stehenden Spulen 9 jedoch von innen.

Wie aus Fig. 2 ersichtlich ist, umfasst bzw. besteht der Bewehrungsstab 2 aus einem Kernstab 10 und einem, den Kernstab 10 umgebenden Randlaminat 11.

Es sei jedoch darauf hingewiesen, dass es auch möglich ist, dass der Bewehrungsstab 2 nur aus dem Kernstab 10 besteht, wie dies nachstehend noch ausgeführt wird.

Die Anzahl der Spulen 9 richtet sich nach der Anzahl der Mineralfasern 5, die im Kernstab 10 angeordnet sind. Es wird für jede einzelne Mineralfaser 5 im Kernstab 10 eine eigene Spule 9 verwendet. Insbesondere kann sich die Anzahl der Spulen 9 nach einem gewünschten Kernstabdurchmesser 12 des Kernstabes 10 richten.

Es sei an dieser Stelle darauf hingewiesen, dass eine Mineralfaser 5 aus mehreren Filamenten bestehen kann bzw. diese umfassen kann. In diesem Fall kann die Mineralfaser 5 auch als so genannter Roving bezeichnet werden. Andererseits besteht aber auch die Möglichkeit, dass die Mineralfasern 5 so genannte Monofilamente sind.

Dementsprechend kann also die Anlage 1 für jeden Mineralfaserroving oder für jedes Monofilament eine eigene Spule aufweisen.

Es sind auch Mischvarianten umfassend oder bestehend aus Mineralfaserrovings und Monofilamenten möglich. Aufgrund der besseren mechanischen Eigenschaften werden allerdings Mineralfaserrovings eingesetzt.

Das Spulengatter selbst kann als einfaches, rahmenartiges Gestell ausgeführt sein, in dem die Spulen 9 auf mehrere Ebenen verteilt angeordnet sind. Die Spulen 9 können bezogen auf die Spulenachse stehend oder liegend angeordnet sein.

Anstelle auf einem Spulengatter können die Mineralfasern 5 bereits auf eine vordefinierbare Länge geschnitten vorrätig gehalten werden.

Anstelle eines Spulengatters können die Spulen 9 auch in einem Regal vorrätig gehalten werden, wenn der Abzug der Mineralfaser 5 aus dem Inneren der Spule 9 erfolgt (so genannter Innenabzug)

Von der Einrichtung 4 zur Bereitstellung von endlosen Mineralfasern 5 werden die Mineralfasern 5 in die Einrichtung 6 zur Versetzung der Mineralfasern 5 mit dem Harz 7 befördert, insbesondere gezogen.

Die Einrichtung 6 zur Versetzung der Mineralfasern 5 mit dem Harz 7 ist bevorzugt als Becken ausgeführt in dem das Harz 7 enthalten ist. Das Becken kann in Produktionsrichtung gemäß Pfeil 3 länglich gestreckt ausgebildet sein. Mit anderen Worten kann das Becken eine Länge in Produktionsrichtung gemäß Pfeil 3 aufweisen, die größer ist, als eine Breite senkrecht auf die Produktionsrichtung gemäß Pfeil 3. Beispielsweise kann die Länge des Beckens in Produktionsrichtung ausgewählt sein aus einem Bereich von 2 m bis 20 m. Es wird damit erreicht, dass die Mineralfasern 5 ausreichend mit dem Harz benetzt bzw. versetzt werden, sodass die Mineralfasern 5 nach dem Verlassen der Einrichtung 6 zur Versetzung der Mineralfasern 5 mit dem Harz 7 eine Harzschicht aufweisen, vorzugsweise auf der gesamten Oberfläche in Längsrichtung.

Die Tiefe des Beckens kann ausgewählt sein aus einem Bereich von 0,15 m bis 2 m, insbesondere aus einem Bereich von 0,15 m bis 1 m. Flachere Becken haben dabei den Vorteil, dass die Mineralfasern 5 für das Eintauchen in das Harz 7 eine geringere Umlenkung erfahren.

Um zu erreichen, dass die Mineralfasern 5 in das Harz 7 eingetaucht werden, können in dem Becken entsprechende Einbauten, beispielsweise ein oder mehrere (z.B. jeweils eine im Bereich des Eintauchens der Mineralfasern 5 in das Harz 7 und eine im Bereich des Austritts der Mineralfasern 5 aus dem Harz) Rollen 13 drehbar gehalten vorgesehen sein, die insbesondere zumindest an einer Harzbadoberfläche 14 anliegen, vorzugsweise ebenfalls in das Harzbad eintauchen. Die Einbauten verlaufen mit ihrer Längserstreckung quer zur Produktionsrichtung gemäß Pfeil 3.

Bevorzugt werden zur Vermeidung von Prozessunterbrechungen nicht drehbar gelagerte, d.h. fest stehende Rollen 13 oder Zylinder verwendet. Dies hat den Vorteil, dass bei Faserbrüchen bzw. Filamentbrüchen die Fasern bzw. Filamente nicht auf den Rollen 13 aufgewickelt werden.

Anstelle eines Beckens kann auch eine Sprühanlage, mit der das Harz 7 auf die Mineralfasern 5 aufgesprüht wird, oder eine Streicheinrichtung, mit der das Harz auf die Mineralfasern 5 aufgestrichen wird, oder eine oder mehrere, gegebenenfalls eine flexible Oberfläche aufweisende, Auftragwalze(n) (= Imprägnierwalze(n)), die in das Harz teilweise eintaucht/eintauchen und durch das Rotieren Harz aus einem Harzbecken auf die Mineralfasern 5, die tangential über die Auftragwalze(n) und diese berührend geführt werden, überträgt, vorgesehen werden. Die Ausbildung der Einrichtung 6 zur Versetzung der Mineralfasern 5 mit dem Harz 7 als Becken ist jedoch die bevorzugte.

Oberhalb der Einrichtung 6 zur Versetzung der Mineralfasern 5 mit dem Harz 7 kann eine entsprechende Absaugung, gegebenenfalls mit einer Absaughaube vorgesehen sein, mit der die von dem Harz aufsteigenden Dämpfe abgesaugt werden können.

Weiter kann die Einrichtung 6 zur Versetzung der Mineralfasern 5 mit dem Harz 7 mit zumindest einer Einrichtung, insbesondere Leitung, zur, insbesondere automatischen, Zufuhr von Harz 7 versehen sein, sodass, insbesondere im Becken, die Harzmenge bzw. das Harzvolumen zumindest annähernd konstant gehalten wird bzw. der verbrauchte Anteil an Harz 7 nach bestimmten Zeitintervallen ersetzt wird, d.h. frisches Harz 7 zugeführt wird.

Das Harz 7 liegt in der Einrichtung 6 zur Versetzung der Mineralfasern 5 mit dem Harz 7 in unvernetztem bzw. vorvernetztem Zustand mit geringem Vernetzungsgrad vor, sodass das Harz 7 flüssig ist.

Weiter ist das Harz 7 in der Einrichtung 6 zur Versetzung der Mineralfasern 5 mit dem Harz 7 bevorzugt bereits mit einem Härter, d.h. einem Vernetzer, versetzt. Der Anteil des Härters kann zwischen 0,3 Gew.-% und 50 Gew.-% betragen. Der Härteranteil richtet sich dabei nach dem verwendeten Harz 7 und kann beispielsweise für eine Vinylesterharz zwischen 0,5 Gew.-% und 5 Gew.-% bzw. für ein Epoxidharz zwischen 20 Gew.-% und 50 Gew.-% betragen, bezogen auf die Gesamtmenge des aus dem Harz 7 und dem Härter gebildeten Gemisches.

Als Harz wird vorzugsweise ein Vinylesterharz verwendet. Es können aber auch andere duroplastische Harze verwendet werden, beispielsweise ein Polyesterharz oder ein Epoxidharz oder ein Phenolharz oder ein Matrixsystem basierend auf einem Polyurethan. Es ist auch möglich eine Mischung aus verschiedenen Harzen zu verwenden. Dabei bezieht sich der Ausdruck "verschieden" nicht nur auf unterschiedliche Harztypen an sich, sondern kann auch eine Mischung aus einem Harztyp mit unterschiedlichen Eigenschaften, beispielsweise eine Mischung aus zumindest zwei Vinylesterharzen mit unterschiedlichem Vernetzungsverhalten, eingesetzt werden. Beispielsweise können Harze mit unterschiedlichen funktionellen Gruppen oder mit unterschiedlichem Molekulargewicht verwendet werden, um das Eigenschaftsprofil des Bewehrungsstabes 2 anzupassen. Besonders bevorzugt wird als Harz ein Vinylester auf Basis Bisphenol A Epoxid, gelöst in Styrol, oder eine Vinylesterharz auf Basis von Novolak verwendet.

Der Härter ist im Sinne dieser Beschreibung eine chemische Verbindung, die durch Energiezufuhr die Vernetzung des Harzes 7 oder der Harze 7 bewirkt bzw. einleitet. Die dafür notwendige Energie kann je nach Härtertyp durch Wärme, durch Strahlung, beispielsweise UV-Strahlung, etc., zugeführt werden.

Es kann aber auch ein Härter eingesetzt werden, der ohne zusätzliche Energiezufuhr in der Lage ist die Vernetzungsreaktion durch Reaktion mit funktionellen Gruppen des Harzes 7 zu starten bzw. zu initiieren. Ein solcher Härter kann beispielsweise ein Diisocyanat sein und wird ausschließlich oder bevorzugt in Kombination mit Härtern aus der Gruppe der Radikalbildner verwendet.

Beispiele für einsetzbare Diisocyanate sind Toluol-2,4-diisocyanat (TDI), Diphenylmethandiisocyanat bzw. Methylendiphenyldiisocyanat (MDI), Hexamethylendiisocyanat (HMDI), Polymeres Diphenylmethandiisocyanat (PMDI), Isophorondiisocyanat (IPDI), 4,4'-Diisocyanatodicyclohexylmethan (H12MDI).

Es sind aber auch andere als die genannten Diisocyanate einsetzbar.

Der Anteil an dem zumindest einen Diisocyanat kann ausgewählt sein aus einem Bereich von 5 Gew.-% bis 30 Gew.-%, bevorzugt aus einem Bereich von 10 Gew.-% bis 20 Gew.-%, wobei der Anteil bezogen ist auf die Harzmasse.

Als Härter, d.h. Starter der Vernetzungsreaktion kann aber auch zumindest ein Fotoinitiator eingesetzt werden.

Der Fotoinitiator kann beispielsweise Benzophenon, Bis(2,4,6- trimethylbenzol)phenylphosphinoxid, 2,2-Dimethoxy-1,2-diphenylethan-1-on sein.

Es sind aber auch andere als die genannten Fotoinitiatoren einsetzbar.

Der Anteil an dem zumindest einen Fotoinitiator kann ausgewählt sein aus einem Bereich von 0,5 Gew.-% bis 5 Gew.-%, bevorzugt aus einem Bereich von 1 Gew.-% bis 3 Gew.-%, wobei der Anteil bezogen ist auf die Harzmasse.

Das Harz 7 kann bei Raumtemperatur auf die Oberfläche der Mineralfasern 5 aufgebracht werden. Es ist aber auch eine geringe Temperierung des Harzes 7 möglich, die jedoch nicht so hoch sein darf, dass die Härtung des Harzes 7 in der Einrichtung 6 zur Versetzung der Mineralfasern 5 mit dem Harz 7 bewirkt wird. Beispielsweise kann die Temperatur des Harzes 7 in der Einrichtung 6 zur Versetzung der Mineralfasern 5 mit dem Harz 7 zwischen Raumtemperatur (= 20 °C) und 35 °C betragen.

In der bevorzugten Ausführungsvariante der Anlage 1 befindet sich in Produktionsrichtung gemäß Pfeil 3 hinter der Einrichtung 6 zur Versetzung der Mineralfasern 5 mit dem Harz 7 eine Abstreifvorrichtung 15 zur Entfernung eines Teils des auf die Mineralfasern 5 aufgetragenen Harzes 7.

Diese Abstreifvorrichtung 15 ist vorzugsweise als Lochscheibe 16 ausgebildet, wie dies aus Fig. 3 ersichtlich ist. Die Lochscheibe 16 weist mehrere Bohrungen 17 auf, durch welche die mit dem Harz 7 beladenen ((über)gesättigten) Mineralfasern 5 gezogen werden.

Die lichte Weite der Bohrungen 17 ist so bemessen, dass eine Mineralfaser 5 oder ein Bündel an Mineralfasern 5, wie dies im Folgenden noch näher erläutert wird, mit einem "Spiel" durchgezogen werden kann, wobei das Spiel an den Harzgehalt angepasst ist, der auf den Mineralfasern 5 oder dem Mineralfaserbündel verbleiben soll. Beispielsweise kann dass Spiel zwischen 0,5 mm und 5 mm betragen. Jedenfalls ist das "Spiel" nicht so groß, dass kein Harz 7 abgestreift wird, sondern baut sich vielmehr ein Staudruck auf, der eine definierte Harzmenge abstreift. Es kann damit der Fasermassegehalt im Bewehrungsstab 2 eingestellt werden.

Anstelle von Bohrungen 17 und/oder zusätzlich zu den Bohrungen 17 können auch Durchbrüche vorgesehen werden, die sich in von der kreisrunden Geometrie unterscheiden, beispielsweise Durchbrüche mit ovalem, viereckigem, sechseckigem, achteckigem, etc. Querschnitt.

Die Bohrungen 17 und/oder die Durchbrüche sind in der Lochscheibe 16 bevorzugt so angeordnet, dass die Mineralfasern 5 oder die Mineralfaserbündel zwar mit Abstand zueinander durchgezogen werden, allerdings sind sie dabei schon so zueinander orientiert, dass sich die Position im Kernstab 10 nur mehr durch die Reduktion dieses Abstandes ergibt. Mit anderen Worten ausgedrückt gibt die Lochscheibe 16 die Anordnung der Mineralfasern 5 oder der Mineralfaserbündel im Kernstab 10 in Art einer Explosionsdarstellung wieder, da die Bohrungen 17 und/oder Durchbrüche beabstandet zueinander angeordnet sind. Die Bohrungen 17 bzw. Durchbrüche sind also insbesondere auf einem oder mehreren konzentrischen Kreisen angeordnet.

Prinzipiell ist es aber auch möglich mehr als eine Abstreifvorrichtung 15 einzusetzen.

Es ist dabei möglich, dass mehrere bzw. zumindest zwei Abstreifvorrichtungen 15 nebeneinander angeordnet sind. Ebenso können mehrere bzw. zumindest zwei oder drei oder vier, etc., Abstreifvorrichtungen 15 in Produktionsrichtung gemäß Pfeil 3 hintereinander angeordnet sein, wobei es in diesem Fall auch möglich ist, dass die Bohrungen bzw. Durchbrüche der in Produktionsrichtung hinteren, d.h. zweiten Lochscheibe im Vergleich zu den Bohrungen 17 bzw. Durchbrüche der vorderen, ersten Lochscheibe 16 kleinere Abmessungen aufweisen. Generell kann der Durchmesser der Bohrungen 17 bzw. die lichte Weite der Durchbrüche bei Vorhandensein von mehreren Abstreifvorrichtungen hintereinander schrittweise reduziert sein, sodass der Harzanteil, der an einer Mineralfaser 5 haftet oder der an einem Mineralfaserbündel haftet schrittweise reduziert wird.

Die Lochscheibe 16 besteht vorzugsweise aus einem Werkstoff, der eine geringe Haftung für das Harz 7 aufweist. Beispielsweise kann die Lochscheibe 16 als flexibler Nachgebeabscheider ausgebildet sein. Ebenso besteht die Möglichkeit, dass die Lochscheibe 16 nur im Bereich der Bohrungen 17 oder Durchbrüche aus diesem Werkstoff besteht oder die Bohrungen 17 oder Durchbrüche mit diesem Werkstoff ausgekleidet sind. Der flexible Nachgebeabscheider kann ein Elastomer sein, beispielsweise ausgewählt aus einer Gruppe umfassend oder bestehend aus SBR, NBR, NR, XNBR, IR, oder ein thermoplastisches Elastomer, sein bzw. dieses umfassen.

Anstelle eines flexiblen Nachgebeabscheiders kann für die Abstreifvorrichtung 15 auch ein starrer Werkstoff verwendet werden, beispielsweise ein Hartmetall. Es kann damit eine bessere Formgebung des Mineralfaserstranges erreicht werden.

Zudem sind auch Mischvarianten möglich, wenn mehr als eine Abstreifvorrichtung 17 in Produktionsrichtung gemäß Pfeil 3 hintereinander angeordnet ist. So kann z.B. eine erste Abstreifvorrichtung 17 aus einem Hartmetall bestehen bzw. dieses im Bereich um die Bohrung(en) 17 oder den Durchbruch bzw. die Durchbrüche aufweisen. Eine in Produktionsrichtung hinter dieser ersten Abstreifvorrichtung 17 vorgesehene weitere Abstreifvorrichtung kann dann aus dem flexiblen Nachgebeabscheider bestehen, wie dies voranstehend beschrieben ist. Dabei ist es auch möglich, dass zwischen der ersten Abstreifvorrichtung 17 und der weiteren Abstreifvorrichtung 17 noch zusätzliche Abstreifvorrichtungen 17 vorgesehen sind, die beispielsweise wiederum aus einem Hartmetall bestehen bzw. dieses im genannten Bereich umfassen können.

Anstelle einer Lochscheibe 16 kann die Abstreifvorrichtung 15 auch anders ausgebildet sein. Beispielsweise kann die Abstreifvorrichtung 15 in Form einer Düse oder Schlitzdüse, durch die die Mineralfaser(n) 5 gezogen werden, oder in Form von zwei gegenläufig rotierenden Abstreifwalzen ausgebildet sein. Auch dabei besteht die Möglichkeit, mehrere Abstreifvorrichtungen 15 nebeneinander und/oder in Produktionsrichtung gemäß Pfeil 3 hintereinander anzuordnen.

In Produktionsrichtung hinter der Einrichtung 6 zur Versetzung der Mineralfasern 5 mit dem Harz 7 und hinter der Abstreifvorrichtung 15, falls die Abstreifvorrichtung 15 in der Anlage 1 angeordnet ist, und vor der Einrichtung 8 zur Härtung des Harzes 7 ist zumindest eine Einrichtung 18 zur Umwicklung der mit dem Harz 7 versehenen Mineralfasern 5 mit einem Faden 19 oder Streifen vorgesehen. Gegebenenfalls kann aber auch eine Abstreifvorrichtung 15 im Bereich der oder in der Einrichtung 18 zur Umwicklung der mit dem Harz 7 versehenen Mineralfasern 5 mit dem Faden 19 oder Streifen vorgesehen sein.

Die Mineralfasern 5 werden vor dieser Einrichtung 18 zur Umwicklung des mit dem Harz 7 versehenen Mineralfasern 5 mit dem Faden 19 oder dem Streifen bereits gebündelt, d.h. soweit aneinander angenähert, dass sie im Wesentlichen bereits die relative Position zueinander aufweisen, die sie im fertigen Kernstab 10 einnehmen.

Die Umwicklung der mit dem Harz 7 versehenen Mineralfasern 5 kann in Form einer einfachen Spiralwicklung erfolgen. Diese ergibt sich einerseits aus dem Vorschub der Mineralfasern 5 in Produktionsrichtung und andererseits aus dem in einem Winkel 20 zur Produktionsrichtung zugeführten Faden 19, der beispielsweise zwischen 10° und 90° betragen kann.

Im einfachsten Fall umfasst also die Einrichtung 18 eine drehbar gelagerte Spule 21, von der der Faden 19 oder der Streifen abgewickelt wird. Es ist hier aber ebenfalls die Innenabwicklung von der Spule 21 möglich, wie dies voranstehend ausgeführt wurde. Die drehbare Lagerung der Spule 21 ist deshalb nicht zwingend erforderlich.

Es können auch mehr als eine Spule 21 vorgesehen werden, beispielsweise zwei oder drei, etc., die ebenfalls eine Spiralwicklung mit gleichgerichteten Fäden 19 oder Streifen erzeugen.

In der bevorzugten Ausführungsvariante der Anlage 1 wird jedoch mit mehreren Spulen 21, insbesondere zwei, eine Kreuzwicklung erzeugt, sodass also die Fäden 19 bzw. Streifen gegenläufig auf die Mineralfasern 5 aufgebracht werden. Dazu kann, wie in Fig. 1 gezeigt, eine Spule 21 oberhalb und eine Spule 21 unterhalb des Mineralfaserstranges oder eine Spule links und eine Spule rechts neben dem Mineralfaserstrang angeordnet werden.

Unter einer Kreuzwicklung im Sinne der Erfindung wird eine Wicklung verstanden, bei der zumindest zwei Fäden so gewickelt werden, dass sich die Fäden überkreuzen, also Kreuzungsstellen ausbilden.

Der mit dem Faden 19 oder Streifen umwickelte Mineralfaserstrang wird danach der Einrichtung 8 zur Härtung des Harzes 7 zugeführt, in der die zumindest teilweise Vernetzung des Harzes 7 erfolgt.

Je nach verwendetem Härtertyp kann die Einrichtung 8 zur Härtung des Harzes 7 eine Heizstrecke, eine Bestrahlungsvorrichtung, beispielsweise zur Abgabe von UV-Licht, etc. sein. Sofern aufgrund des verwendeten Härters keine zusätzliche Energiezufuhr für die Initiierung der Härtung notwendig ist, kann die Einrichtung 8 als einfache (Förder-)Strecke ausgeführt sein.

Die Heizstrecke kann auch mehrere Heizzonen aufweisen, die eine unterschiedliche Temperatur aufweisen, sodass die Vernetzung des Harzes 7 nicht schlagartig erfolgt, sondern über einen vorbestimmbaren Zeitraum durchgeführt wird. Die Heizstrecken können auch auf mehrere Einrichtungen 8 zur Härtung des Harzes 7 aufgeteilt sein, die jeweils eine zumindest annähernd konstante Temperatur aufweisen und hintereinander angeordnet sind.

Für den Fall, dass die Einrichtung 8 zur Härtung des Harzes 7 eine Bestrahlungsvorrichtung aufweist, kann diese mehrere derartige Bestrahlungsvorrichtungen aufweisen, die gegebenenfalls unterschiedliche Energiedosen in das Harz 7 einstrahlen.

Prinzipiell besteht auch die Möglichkeit, dass mehrere Einrichtungen 8 zur Härtung des Harzes 7 nebeneinander angeordnet sind, für den Fall, dass mehrere Bewehrungsstäbe 2 parallel hergestellt werden.

Im Bereich der Einrichtung 8 zur Härtung des Harzes 7 können entsprechende Absaugeinrichtungen zur Absaugung der von dem Harz abgegebenen Dämpfe vorgesehen sein.

Für den Fall, dass die Einrichtung 8 zur Härtung des Harzes 7 ein oder mehrere Heizstrecken aufweist, können diese kanalartig ausgebildet sein, durch die das Mineralfaserpaket gezogen wird. Dabei erfolgt die Luftzufuhr bevorzugt nur über die Stirnseiten der Heizkanäle bzw. Heizstrecken.

Nachdem das Mineralfaserbündel die Einrichtung 8 verlassen hat, ist der Kernstab 10 so weit fertig, dass er das Randlaminat 11 aufnehmen kann.

Sofern kein Randlaminat 11 auf den Kernstab 10 aufgebracht wird, ist dieser an sich nach der Härtung des Harzes 7 fertig. Gegebenenfalls kann noch ein Finish aufgetragen werden, wie dies im Nachfolgenden noch erläutert wird.

Für die Herstellung des Randlaminats 10 sind in Produktionsrichtung gemäß Pfeil 3 hinter der Einrichtung 8 zur zumindest teilweisen Härtung des Harzes 7 des Kernstabes 10 oder parallel zu den voranstehend beschriebenen Anlagenteilen der Anlage 1 in dieser zumindest eine weitere Einrichtung 22 zur Bereitstellung von weiteren endlosen Mineralfasern 23, und zumindest eine weitere Einrichtung 24 zur Versetzung der weiteren Mineralfasern 23 mit einem weiteren Harz 25, durch welche die weiteren Mineralfasern 23 gefördert werden vorgesehen bzw. angeordnet. Weiter kann zumindest eine weitere Abstreifeinrichtung 26 nach der weiteren Einrichtung 24 zur Versetzung der weiteren Mineralfasern 23 mit einem weiteren Harz 25 vorgesehen sein, um einen Teil des auf den weiteren Mineralfasern 23 aufgetragenen weiteren Harzes 25 wieder zu entfernen.

Die weitere Einrichtung 22 zur Bereitstellung von weiteren endlosen Mineralfasern 23 ist bevorzugt entsprechend der Einrichtung 4 zur Bereitstellung der endlosen Mineralfasern 5 ausgebildet. Es sei daher auf voranstehende Ausführungen dazu verwiesen. Prinzipiell kann die Einrichtung 22 zur Bereitstellung von weiteren endlosen Mineralfasern 23 auch unterschiedlich zur Einrichtung 4 zur Bereitstellung der endlosen Mineralfasern 5 ausgebildet sein.

Die weitere Einrichtung 24 zur Versetzung der weiteren Mineralfasern 23 mit dem weiteren Harz 25 ist bevorzugt entsprechend der Einrichtung 6 zur Versetzung der Mineralfasern 5 mit dem Harz 7 ausgebildet. Es sei daher auf voranstehende Ausführungen dazu verwiesen. Prinzipiell kann die weitere Einrichtung 24 zur Versetzung der weiteren Mineralfasern 23 mit dem weiteren Harz 25 auch unterschiedlich zur Einrichtung 6 zur Versetzung der Mineralfasern 5 mit dem Harz 7 ausgebildet sein. Es ist also beispielsweise möglich, dass die weitere Einrichtung 24 zur Versetzung der weiteren Mineralfasern 23 mit dem weiteren Harz 25 als Sprüheinrichtung und die Einrichtung 6 zur Versetzung der Mineralfasern 5 mit dem Harz 7 als Tauchbecken ausgeführt sind.

Die weitere Abstreifvorrichtung 26 ist bevorzugt entsprechend der Abstreifvorrichtung 15 ausgebildet, insbesondere als Lochscheibe oder Düse. Es sei daher auf voranstehende Ausführungen dazu verwiesen. Prinzipiell kann die weitere Abstreifvorrichtung 26 aber auch unterschiedlich zur Abstreifvorrichtung 15 ausgebildet sein.

Die weiteren Mineralfasern 23 sind aus der Gruppe von möglichen Mineralfasern ausgewählt, die hinsichtlich der Mineralfasern 5 genannt wurden. Es sei daher auf die entsprechenden Ausführungen dazu verwiesen. Demzufolge kann das Randlaminat 11 die gleichen Mineralfasern wie der Kernstab 10 aufweisen. Vorzugsweise sind sowohl die Mineralfasern 5 als auch die weiteren Mineralfasern 23 Vulkanitfasern, insbesondere Basaltfasern bzw. Andesitfasern..

Es sind aber auch Mischvarianten möglich, dass also beispielsweise die Mineralfasern 5 des Kernstabes 10 Glas- oder Carbonfasern sind und die weiteren Mineralfasern 23 Vulkanitfasern, insbesondere Basaltfasern bzw. Andesitfasern, sind oder umgekehrt.

Das weitere Harz 25 kann aus der Gruppe an möglichen Harzen ausgewählt sein, die voranstehend zum Harz 7 genannt wurde. Es sei daher auf die entsprechenden Ausführungen dazu verwiesen. Insbesondere ist also sowohl das Harz 7 als auch das weitere Harz 25 ein Vinylesterharz.

Es sind aber auch Mischvarianten möglich, dass also beispielsweise das Harz 7 des Kernstabes 10 ein Epoxidharz und das weitere Harz 25 des Randlaminats 11 eine Vinylesterharz ist.

Unter Mischvariante ist bezüglich des Harzes auch gemeint, dass sowohl das Harz 7 als auch das weitere Harz 25 vom gleichen Harztyp sind, sich diese Harze aber hinsichtlich der Anzahl der Vernetzungsstellen oder hinsichtlich der Molekülmasse, etc. unterscheiden.

Die mit dem weiteren Harz 25 versehenen weiteren Mineralfasern 23 werden, gegebenenfalls nach der Abstreifung eines Teils des aufgebrachten weiteren Harzes 25, mit dem Kernstab 10 zusammengeführt, wobei die Zusammenführung zwischen der Einrichtung 8 zur Härtung des Harzes 7 und einer weiteren Einrichtung 27 zur Härtung des weiteren Harzes 25 und gegebenenfalls Endhärtung des Harzes 7 des Kernstabes 10 erfolgt.

Die weitere Einrichtung 27 zur Härtung des weiteren Harzes 25 und gegebenenfalls Endhärtung des Harzes 7 des Kernstabes 10 kann entsprechend der Einrichtung 8 zur zumindest teilweisen Härtung des Harzes 7 ausgebildet sein. Es wird daher diesbezüglich auf die voranstehenden Ausführungen zur Einrichtung 8 zur zumindest teilweisen Härtung des Harzes 7 verwiesen.

Vorzugsweise ist auch die Einrichtung 27 zur Härtung des weiteren Harzes 25 und gegebenenfalls Endhärtung des Harzes 7 des Kernstabes 10 als Heizeinrichtung, insbesondere Heizkanal, mit einer Heizstrecke oder vorzugsweise mehreren Heizstrecken mit unterschiedlicher Temperatur ausgebildet.

Die Temperatur in der Einrichtung 8 zur zumindest teilweisen Härtung des Harzes 7 und/oder in der Einrichtung 27 zur Härtung des weiteren Harzes 25 und gegebenenfalls Endhärtung des Harzes 7 des Kernstabes 10 kann so geführt sein, dass in einem ersten Bereich eine Anfangstemperatur vorherrscht, daran ein zweiter Bereich mit einer zweiten Temperatur, die höher ist als die Anfangstemperatur, anschließt, und an diesen Bereich ein dritter Bereich anschließt, in dem eine Temperatur vorherrscht die niedriger oder höher ist als im zweiten Bereich.

Beispielsweise kann eine eingestellte Temperatur im ersten Temperaturbereich ausgewählt sein aus einem Bereich von 50 °C bis 500 °C, im zweiten Temperaturbereich ausgewählt sein aus einem Bereich von 250 °C bis 600 °C, und im dritten Temperaturbereich ausgewählt sein aus einem Bereich von 75 °C bis 500 °C.

Es sei darauf hingewiesen, dass die eingestellten Temperaturen jene sind, die an der Heizeinrichtung, insbesondere an den IR-Strahlern, eingestellt werden. Aufgrund der vorherrschenden Bedingungen in den Heizstrecken ergeben sich daraus die Temperaturen, mit bei denen die Härtung des Harzes 25 und gegebenenfalls des Harzes 7 erfolgt.

Es sei an dieser Stelle erwähnt, dass - obwohl nicht dargestellt - es möglich ist, dass in der Anlage 1 entsprechende Einrichtungen angeordnet sind, die ein Zusammenkleben der einzelnen mit dem Harz 7 beladenen Mineralfasern 5 und/oder der einzelnen mit dem weiteren Harz 25 beladenen weiteren Mineralfasern 23 vor dem Härten des Harzes 7 bzw. des weiteren Harzes 25 bzw. vor dem bewussten Zusammenführen der Mineralfasern 5 und/oder weiteren Mineralfasern 23 verhindern. Diese Einrichtungen können beispielsweise als Rechen ausgebildet sein, zwischen deren Zinken die einzelnen Mineralfasern 5 oder weiteren Mineralfasern 23 bzw. die gegebenenfalls aus den Mineralfasern 5 oder weiteren Mineralfasern 23 gebildeten Faserbündel geführt werden.

Das Randlaminat 11 wird derart gebildet, dass die mit dem weiteren Harz 25 versehenen weiteren Mineralfasern 23 bzw. weiteren Mineralfaserbündel zumindest annähernd kreisförmig um den (kreuz)gewickelten Kernstab 10 angeordnet werden. Der Kernstab 10 ist also von dem Randlaminat 11 umgeben, insbesondere vollständig umgeben. Es kann dafür ebenfalls zumindest eine Einrichtung in der Anlage 1 im Bereich der Zusammenführung des Kernstabes 10 mit den weiteren, mit dem weiteren Harz 25 versehenen Mineralfasern 23 vorgesehen sein, die die hierfür notwendige Führung der weiteren Mineralfasern 23 ermöglicht. Beispielsweise kann hierfür ebenfalls eine Lochscheibe verwendet werden, die in der Mitte zur ungehinderten Führung des Kernstabes 10 einen an den Durchmesser des Kernstabes 10 angepassten Durchbruch, insbesondere Bohrung, aufweist.

Gegebenenfalls können die zumindest eine weitere Abstreifvorrichtung 26 und diese Einrichtung zur Führung der weiteren Mineralfasern 23 ein einziges Bauteil der Anlage 1 bilden.

Der Bewehrungsstab 2 weist an seiner Oberfläche eine Oberflächenstruktur auf, über die eine bessere Einbindung in das zu verstärkende Material ermöglicht wird.

Zur Herstellung dieser Oberflächenstruktur ist vor der weiteren Einrichtung 27 zur Härtung des weiteren Harzes 25 und gegebenenfalls Endhärtung des Harzes 7 eine Wickeleinrichtung 28 angeordnet. In der einfachsten Ausführungsvariante dieser Wickeleinrichtung 28 weist diese zumindest eine Spule 29 auf, von der ein weiterer Faden 30 oder ein weiterer Streifen abgewickelt und in das noch nicht gehärtete weitere Harz 25 eingedrückt wird. Das Eindrücken wird mit einer entsprechenden Spannung des weiteren Fadens 30 oder des weiteren Streifens erreicht.

Der zumindest eine weitere Faden 30 oder der zumindest eine weitere Streifen kann in Art einer (einfachen) Spiralwicklung um die weiteren Mineralfasern 23 des Randlaminats 11 gewickelt werden, sodass dadurch eine gewindeartige Oberflächenstruktur nach dem Härten des weiteren Harzes 25 am Randlaminat 11 ausgebildet wird.

In Produktionsrichtung gemäß Pfeil 3 nach der Einrichtung 27 zur Härtung des weiteren Harzes 25 und gegebenenfalls Endhärtung des Harzes 7 ist zumindest eine Abwickeleinrichtung 31 vorgesehen. In der einfachsten Ausführungsvariante dieser zumindest einen Abwickeleinrichtung 31 weist diese zumindest eine Spule 32 auf, auf die der von dem gehärteten Randlaminat 11 abgezogene zumindest eine weitere Faden 30 bzw. zumindest eine weitere Streifen wieder aufgewickelt wird. Am gehärteten Randlaminat 11 verbleibt durch das Entfernen des zumindest einen weiteren Fadens 30 bzw. zumindest einen weiteren Streifens der durch diesen erzeugte Eindruck, der die Oberflächenstruktur bildet.

Nach der Härtung des Randlaminats 11 und gegebenenfalls Endhärtung des Kernstabes 10 in der weiteren Einrichtung 27 zur Härtung ist der Bewehrungsstab 2 fertig.

Im fertigen Bewehrungsstab 2 sind bevorzugt sämtliche Mineralfasern 5, 23, 35 in der Harzmatrix vollständig eingebettet, d.h. dass mit Ausnahme der Stirnflächen der Bewehrungsstab 2 außen lediglich eine Harzschicht aufweist.

Nachdem die Anlage 1 vorzugsweise kontinuierlich betrieben wird, muss der Bewehrungsstab 2 noch auf die gewünschte Länge abgelängt werden, wozu in der Anlage 1 nach der Einrichtung 27 zur Härtung des weiteren Harzes 25 und gegebenenfalls Endhärtung des Harzes 7 eine Sägeeinrichtung 33 bzw. Trenneinrichtung vorgesehen sein kann.

Nach einer Ausführungsvariante der Anlage 1, und damit des Verfahrens zur Herstellung des Bewehrungsstabes 2, kann vorgesehen sein, dass vor der weiteren Einrichtung 27 zur Härtung des weiteren Harzes 25 und gegebenenfalls Endhärtung des Harzes 7 eine dritte Einrichtung 34 zur Zuführung von harzfreien endlosen Mineralfasern 35 angeordnet ist, wie dies in Fig. 1 strichliert dargestellt ist.

Diese dritte Einrichtung 34 zur Zuführung von harzfreien endlosen Mineralfasern 35 ist insbesondere in Produktionsrichtung gemäß Pfeil 3 nach der weiteren Einrichtung 24 zur Versetzung der weiteren Mineralfasern 23 mit dem weiteren Harz 25 angeordnet.

Die dritte Einrichtung 34 zur Bereitstellung der harzfreien endlosen Mineralfasern 35 ist bevorzugt entsprechend der Einrichtung 4 zur Bereitstellung der endlosen Mineralfasern 5 ausgebildet. Es sei daher dazu auf voranstehende Ausführungen verwiesen. Prinzipiell kann die dritte Einrichtung 34 zur Bereitstellung von harzfreien endlosen Mineralfasern 35 unterschiedlich zur Einrichtung 4 zur Bereitstellung der endlosen Mineralfasern 5 ausgebildet sein.

Es kann aber auch vorgesehen werden, dass diese dritte Einrichtung 34 zur Zuführung von harzfreien endlosen Mineralfasern 35 mit der weiteren Einrichtung 22 zur Zuführung der weiteren Mineralfasern 23 kombiniert ist. In diesem Fall werden die harzfreien Mineralfasern 35 nicht durch die weitere Einrichtung 24 zur Versetzung der weiteren Mineralfasern 23 mit dem weiteren Harz 25 geführt.

Die harzfreien Mineralfasern 35 sind aus der Gruppe von möglichen Mineralfasern ausgewählt, die hinsichtlich der Mineralfasern 5 genannt wurden. Es sei daher auf die entsprechenden Ausführungen dazu verwiesen. Demzufolge kann das Randlaminat 11 die gleichen Mineralfasern wie der Kernstab 10 aufweisen. Vorzugsweise sind sowohl die Mineralfasern 5 als auch die weiteren Mineralfasern 23 und die harzfreien Mineralfasern 35 Vulkanitfasern, insbesondere Basaltfasern bzw. Andesitfasern..

Es sind aber auch Mischvarianten möglich, dass also beispielsweise die Mineralfasern 5 des Kernstabes 10 Glas- oder Carbonfasern sind und die weiteren Mineralfasern 23 Vulkanitfasern, insbesondere Basaltfasern bzw. Andesitfasern, und die harzfreien Mineralfasern 35 Vulkanitfasern, insbesondere Basaltfasern bzw. Andesitfasern, oder Glasfasern oder Carbonfasern sind oder umgekehrt.

Der Anteil an den harzfreien Mineralfasern 35 am Gesamtanteil der Mineralfasern des Randlaminats kann zwischen 10 Gew.-% und 80 Gew.- betragen, insbesondere zwischen 20 Gew.-% und 50 Gew.-%.

Es ist möglich dass die Mineralfasern 5 und/oder die weiteren Mineralfasern 23 und/oder die harzfreien Mineralfasern 35 zueinander unterschiedliche Durchmesser oder einen unterschiedlichen Titer aufweisen. Beispielsweise können die weiteren Mineralfasern 23 und/oder die harzfreien Mineralfasern 35 einen größeren Durchmesser aufweisen als die Mineralfasern 5 oder umgekehrt. Weiter ist es möglich, dass die Mineralfasern 5 und/oder die weiteren Mineralfasern 23 und/oder die harzfreien Mineralfasern 35 aus jeweils Filamenten hergestellt sind, die zueinander einen unterschiedlichen Durchmesser aufweisen, sodass bei gleichem Durchmesser der Mineralfasern 5 und der weiteren Mineralfasern 23 und der harzfreien Mineralfasern 35 diese aus einer unterschiedlichen Anzahl an Mineralfaserfilamenten bestehen.

Prinzipiell ist es auch möglich, zur Herstellung des Kernstabes 10 harzfreie Mineralfasern zuzuführen. Es sei hierzu auf die entsprechenden Ausführungen zur Zuführung der harzfreien Mineralfasern 35 zur Herstellung des Randlaminats 11 verwiesen. Die Anordnung der entsprechenden Einrichtung(en) in der Anlage 1 erfolgt vor der Einrichtung 8 zur zumindest teilweisen Härtung des Harzes 7 des Kernstabes 10.

Nach einer weiteren Ausführungsvariante der Anlage 1, und damit des Verfahrens zur Herstellung des Bewehrungsstabes 2, kann vorgesehen sein, dass nach der Härtung des weiteren Harzes 25 des Randlaminats 11 und gegebenenfalls Endhärten des Harzes 7 des Kernstabes 10 und nach der Entfernung des weiteren Fadens 30 oder des weiteren Streifens auf das Randlaminat 11 eine weitere Schicht aus einem Harz aufgebracht wird. In der Anlage 1 kann dazu eine dritte Einrichtung 36 zum Versetzen des Bewehrungsstabes 2 mit einer dünnen Harzschicht vorgesehen sein, wie dies in Fig. 1 strichliert dargestellt ist. Diese dritte Einrichtung 36 zum Versetzen des Bewehrungsstabes 2 mit der dünnen Harzschicht ist in Produktionsrichtung gemäß Pfeil 3 nach der Abwickeleinrichtung 31 angeordnet.

Diese dritte Einrichtung 36 ist bevorzugt entsprechend der Einrichtung 6 zur Versetzung der Mineralfasern 5 mit dem Harz 7 ausgebildet. Es sei daher auf voranstehende Ausführungen dazu verwiesen. Prinzipiell kann die dritte Einrichtung 36 unterschiedlich zur Einrichtung 6 zur Versetzung der Mineralfasern 5 mit dem Harz 7 ausgebildet sein. Es ist also beispielsweise möglich, dass die dritte Einrichtung 36 als Sprüheinrichtung und die Einrichtung 6 zur Versetzung der Mineralfasern 5 mit dem Harz 7 als Tauchbecken ausgeführt sind.

Das Harz für die dünne Harzschicht kann aus der Gruppe an möglichen Harzen ausgewählt sein, die voranstehend zum Harz 7 genannt wurde. Es sei daher auf die entsprechenden Ausführungen dazu verwiesen. Insbesondere ist sind also sowohl das Harz 7 als auch das weitere Harz 25 und das Harz für die dünne Harzschicht ein Vinylesterharz. Für den Fall, dass unterschiedliche Harze für den Kernstab 10 und/oder das Randlaminat 11 und/oder die dünne, äußere Harzschicht verwendet werden, ist es von Vorteil, wenn die dünne, äußere Harzschicht aufgrund der besseren Alkalibeständigkeit ein Vinylesterharz ist..

Die dünne Harzschicht weist eine maximale Schichtdicke von 200 µm auf. Insbesondere kann die Schichtdicke der dünnen Harzschicht ausgewählt sein aus einem Bereich von 5 µm bis 100 µm.

Zur Härtung dieser dünnen Harzschicht kann eine entsprechende Einrichtung, wie sie voranstehend beschrieben wurden, in der Anlage angeordnet sein. Die Härtung kann aber auch an der Luft ohne weitere spezielle Einrichtung hierfür erfolgen.

Bevorzugt sind sämtliche Mineralfasern, also die Mineralfasern 5 des Kernstabes 10 und die weiteren Mineralfasern 23 des Randlaminats 11 sowie gegebenenfalls die harzfreien Mineralfasern 35 in Längsrichtung des Bewehrungsstabes orientiert. Dies kann erreicht werden, indem die Mineralfasern bzw. der Bewehrungsstab 2 im Endbereich der Anlage von einer Fördereinrichtung gezogen wird. Als Fördereinrichtung kann beispielsweise ein Raupenabzug oder ein Bandabzug verwendet werden. Andere Fördereinrichtungen sind z.B. Kettenabzüge bzw. Greifvorrichtungen mit denen der Bewehrungsstab 2 zumindest teilweise umklammert gezogen wird.

Es sei an dieser Stelle erwähnt, dass die harzfreien Mineralfasern 35 im fertigen Bewehrungsstab 2 ebenfalls von dem Harz 7 bzw. dem weiteren Harz 25 bzw. mit dem Harz der dünnen Harzschicht bedeckt sind. Der Begriff "harzfrei" bezieht sich nur darauf, dass für diese Mineralfasern 35 keine eigene Einrichtung zur Versetzung der Mineralfasern mit einem Harz angeordnet ist. Sinn dieser harzfreien Mineralfasern 35 ist es, den Mineralfaseranteil im Bewehrungsstab 2 zu erhöhen, sodass also die harzfreien Mineralfasern 35 überschüssiges Harz 7 oder 25 des Kernstabes 10 oder des Randlaminats 11 während des Zusammenführens der Mineralfasern aufnehmen.

Der Ausdruck "Orientierung in Längsrichtung" umfasst im Sinne der Erfindung auch eine gewisse Ondulierung von Mineralfasern, die durch die Wicklung zur Herstellung der Oberflächenstruktur des Bewehrungsstabes 2 hervorgerufen wird. Für den Fall, dass der zumindest eine Faden 19 oder der zumindest eine Streifen der Wicklung des Kernstabes 10 als Mineralfaserfaden oder -streifen ausgeführt ist, fällt dieser selbstverständlich nicht unter diese Definition.

Weiter erstrecken sich sämtliche Mineralfasern, also die Mineralfasern 5 des Kernstabes 10 und die weiteren Mineralfasern 23 des Randlaminats 11 sowie gegebenenfalls die harzfreien Mineralfasern 35 bevorzugt ununterbrochen über die gesamte Länge des Bewehrungsstabes 2.

Der Faden 19 und/oder der weitere Faden 30 weist bzw. weisen bevorzugt einen Durchmesser auf der ausgewählt ist aus einem Bereich von 0,03 mm bis 6 mm, insbesondere aus einem Bereich von 0,03 mm bis 0,35 mm. Weiter kann/können der Faden 19 und/oder der weitere Faden 30 eine lineare Dichte aufweisen, die ausgewählt ist aus einem Bereich von 10 tex bis 6000 tex, insbesondere aus einem Bereich zwischen 80 tex und 280 tex.

Beispielsweise kann der Faden 19 einen Durchmesser von 0,05 mm bzw. einen Titer von 14 tex aufweisen.

Der weitere Faden 30 kann beispielsweise einen Durchmesser von 0,3 mm bis 6 mm bzw. einen Titer von 4800 tex aufweisen.

Der Faden 19 und/oder der weitere Faden 30 und/oder der Streifen und/oder der weitere Streifen kann bzw. können aus einem organischen Polymer bestehen, das ausgewählt wird aus einer Gruppe umfassend spinnbare Polymere, wie z.B. Polyamid, Polyester, etc.. Der Faden 19 und/oder der weitere Faden 30 und/oder der Streifen und/oder der weitere Streifen kann bzw. können aber auch aus Mineralfasern bestehen, wie z.B. Vulkanitfasern, insbesondere Basaltfasern bzw. Andesitfasern" Glasfasern, Carbonfasern.

Beispielsweise kann für den Faden 19 ein Polyamidgarn verwendet werden. Hiermit wird im Vergleich zu anderen Polymeren erreicht dass dieses durch Temperatureinwirkung schrumpft und somit dem Bewehrungsstab 2 zusätzliche Stabilität verleiht.

Der weitere Faden 30 kann ein Polyestergarn sein. Hiermit wird erreicht, dass bi Bedarf hohe Zugfestigkeiten beim Wickeln aufgebracht werden können.

Nach einer weiteren, voranstehend bereits angedeuteten Ausführungsvariante der Erfindung kann vorgesehen werden, dass das Harz für die Herstellung des Kernstabes 10 vor der Aufbringung des Randlaminats 11 in der Einrichtung 8 zur Härtung des Harzes nur teilweise gehärtet wird. Insbesondere kann das Harz 7 für die Herstellung des Kernstabes vor der Aufbringung des Randlaminats bis zu einem Härtungsgrad nach DIN 53765 (Bestimmung der Glasübergangstemperatur) von maximal 50 % gehärtet werden. Es kann damit eine gewisse partielle Vernetzung des Randlaminats 11 mit dem Kernstab 10 erreicht werden.

Es ist weiter bevorzugt, wenn der Kernstab 10 vor dem Aufbringen der mit dem Harz versehenen weiteren Mineralfasern 23 für das Randlaminat 11 nicht auf Raumtemperatur abgekühlt wird. Insbesondere kann der Kernstab 10 beim Aufbringen der mit dem Harz versehenen weiteren Mineralfasern 23 für das Randlaminat 11 eine Temperatur aufweisen, die zwischen 50 °C und 100 °C, insbesondere zwischen 60 °C und 80 °C, beträgt. Gegebenenfalls kann dazu eine eigene Heizvorrichtung zur Temperierung des Kernstabes 10 in der Anlage 1 angeordnet sein. Sollte das Harz 7 des Kernstabes 10 nur teilweise gehärtet worden sein, sollte diese Temperatur nicht so hoch sein, dass eine vorzeitige Aushärtung des Harzes 7 erfolgt bevor das Randlaminat 11 ausgebildet worden ist.

Die Geschwindigkeit, mit der der weitere Faden 30 oder der weitere Streifen auf das Randlaminat aufwickelt wird, kann ausgewählt sein aus einem Bereich von 50 U/min bis 1800 U/min.

Die Geschwindigkeit, mit der der Faden 19 oder die Fäden 19 bzw. der oder die Streifen auf den nicht gehärteten Kernstab 10 aufwickelt wird, kann ausgewählt sein aus einem Bereich von 100 U/min bis 5000 U/min, insbesondere von 250 U/min bis 3000 U/min..

Die Geschwindigkeit, mit der der Bewehrungsstab 2 gezogen wird, kann ausgewählt sein aus einem Bereich von 0,5 m/min bis 12 m/min.

Der weitere Faden 30 oder der weitere Streifen kann unter einer auf ihn wirkenden Kraft auf das nicht gehärtete Randlaminat 11 aufgebracht werden, die ausgewählt ist aus einem Bereich von 1 N bis 100 N.

Der Faden 19 oder die Fäden 19 bzw. der oder die Streifen kann/können unter einer auf ihn wirkenden Kraft auf den nicht gehärteten Kernstab 10 aufgebracht werden, die ausgewählt ist aus einem Bereich von 1 N bis 50N. Es ist jedoch auch möglich, den Faden 19 oder die Fäden 19 zur Gänze ohne Spannung auf den Kernstab 10 zu wickeln, insbesondere wenn ein Schrumpffaden verwendet wird, wie dies voranstehend ausgeführt wurde.

Der oder die Streifen und/oder der oder die weitere(n) Streifen können eine Streifenbreite aufweisen, die ausgewählt ist aus einem Bereich von 0,01 mm bis 3,5 mm.

Der Bewehrungsstab 2 kann im Kernstab, nicht zuletzt aufgrund des Verfahrens zu dessen Herstellung einen Gesamtgehalt an Mineralfasern aufweisen, bezogen auf die gesamte Mineralfaser-Harz-Menge, der zwischen 81 Gew.-% und 89 Gew.-% beträgt, wobei der Rest durch den Harzanteil gebildet ist.

Der Gesamtanteil an Mineralfasern im Bewehrungsstab 2 kann zwischen 70 Gew.-% und 89 Gew.-%, insbesondere zwischen 81 Gew.-% und 89 Gew.-%, betragen. Der Harzanteil bildet den Rest auf 100 Gew.-%, bezogen auf den Gesamtgehalt an Harz und Mineralfasern des Bewehrungsstabes 2. Der Gesamtanteil an Mineralfasern umfasst die Mineralfasern 5, die weiteren Mineralfasern 23 und gegebenenfalls die harzfreien Mineralfasern 35. Der Harzanteil bezieht sich auf das Harz 7 des Kernstabes und das weitere Harz 25 des Randlaminats. Nicht umfasst von diesem Anteil ist der Anteil der dünnen Harzschicht, die auf das Randlaminat 11 als Finish aufgebracht werden kann. Unter Berücksichtigung dieses zusätzlichen Harzgehaltes erhöht sich der Harzanteil um maximal 0,5 Gew.-%. Der Bewehrungsstab 2 kann also einen relativ hohen Mineralfaseranteil aufweisen, wodurch dessen mechanische Eigenschaften verbessert werden können.

Nicht berücksichtigt ist bei dieser Betrachtung der Anteile des Harzes und der Mineralfasern am Bewehrungsstab 2 der Masseanteil des Fadens 19 oder der Fäden 19 bzw. des Streifens oder der Streifen die am Kernstab 10 verbleiben.

Nach einer anderen Ausführungsvariante dazu kann vorgesehen werden, dass der Anteil an Mineralfasern 5 im Kernstab 10 zwischen 80 Gew.-% und 90 Gew.-%, bezogen auf den gesamten Mineralfaseranteil im Kernstab 10 und im Randlaminat 11, beträgt. Nachdem der Kernstab 10 durch das Randlaminat 11, insbesondere durch einen bevorzugt relativ höheren Harzgehalt im Randlaminat 11, in Bezug auf den Kernstab 10, vor Umfeldeinflüssen, wie z.B. alkalische Medien, geschützt ist und nachdem die Oberflächenstrukturierung im Wesentlichen auf das Randlaminat 11 beschränkt werden kann, wird durch den im Vergleich zum Mineralfaseranteil im Randlaminat 11 höheren Mineralfaseranteil im Kernstab 10 eine Verbesserung der mechanischen Eigenschaften, insbesondere der Zugfestigkeit, erreicht, da die Mineralfasern 5 im Kernstab 10 im Wesentlichen zur Gänze längsgestreckt und nicht onduliert ausgebildet sind, also ungestört vorliegen. Eine gewisse Ondulierung der Oberflächenschicht des Kernstabes 10 ist jedoch möglich und zulässig, die jedoch zu keiner wesentlichen Veränderung in den mechanischen Eigenschaften des Kernstabes 10 führt.

Wie voranstehend ausgeführt ist es nach einer Ausführungsvariante des Verfahrens zur Herstellung des Bewehrungsstabes 2 vorgesehen, dass das Harz 7 des Kernstabes 10 in der Einrichtung 8 zur Härtung des Harzes 7 nur teilweise gehärtet, d.h. vernetzt wird. Es wird damit möglich, dass während der Endaushärtung dieses Harzes 7 des Kernstabes und der Härtung des weiteren Harzes 25 des Randlaminats 11 in der weiteren Einrichtung 27 zu Härtung eine Vernetzung des Harzes 7 des Kernstabes 10 mit dem weiteren Harz 25 des Randlaminats 11 erzeugt wird, sodass also das Randlaminat 11 besser mit dem Kernstab 10 verbunden ist.

Es ist weiter möglich, dass das Harz 7 mit den Mineralfasern 5 des Kernstabes 10 und gegebenenfalls die dem Kernstab 10 harzfrei zugeführten Mineralfasern 35 und/oder das weitere Harz 25 mit den weiteren Mineralfasern 23 des Randlaminats 11 und gegebenenfalls die dem Randlaminat 11 harzfrei zugeführten Mineralfasern 35 über funktionelle Gruppen an der Oberfläche der Mineralfasern 5, 23, 35, beispielsweise OH-Gruppen, mit dem Harz 7 und/oder weiteren Harz 25 kovalent verbunden sind. Es wird damit eine bessere Anbindung der Mineralfasern 5, 23, 35 an die Harzmatrix erreicht.

Wie bereits voranstehend ausgeführt, besteht nach einer anderen Ausführungsvariante des Verfahrens bzw. des Bewehrungsstabes 2 die Möglichkeit, dass die Mineralfasern 5 und gegebenenfalls 35 des Kernstabes 10 und/oder die weiteren Mineralfasern 23 und gegebenenfalls 35 des Randlaminats 11 in Faserbündeln enthalten sind, wobei der Kernstab 10 und/oder das Randlaminat 11 aus mehreren Faserbündeln besteht/bestehen. Die jeweiligen einzelnen Mineralfasern 5 und gegebenenfalls 35 und/oder 23 und gegebenenfalls 35 können also in Produktionsrichtung gemäß Pfeil 3 vor oder nach der Einrichtung 7 zum Aufbringen des Harzes 7 bzw. der weiteren Einrichtung 24 zur Aufbringung des weiteren Harzes 25 bereits teilweise zusammengeführt werden, sodass Faserbündel 37, 38 aus mehreren Mineralfasern 5 und gegebenenfalls 35 und/oder 23 und gegebenenfalls 35 entstehen, die wie voranstehend beschrieben weiter verarbeitet werden. Der damit hergestellte Bewehrungsstab 2 ist in Fig. 2 im Querschnitt dargestellt. Es kann also der gesamte Stabkörper des Bewehrungsstabes aus Faserbündeln 37, 38 (zusammen mit dem Harz) aufgebaut sein.

Es ist aber auch möglich, dass zur Herstellung des Kernstabes 10 und/oder des Randlaminats 11 ein oder mehrere Faserbündel 37, 38 mit einzelnen Mineralfasern 5, 23, 25 kombiniert werden.

Die Faserbündel 37, 38 können eine Anzahl an einzelnen Mineralfasern 5 und gegebenenfalls 35 und/oder 23 und gegebenenfalls 35 aufweisen, die ausgewählt ist aus einem Bereich von 3 bis 10, insbesondere aus einem Bereich von 4 bis 8.

Es ist dabei möglich, dass die Faserbündel 37 im Kernstab 10 eine Anzahl an Mineralfasern 5 und gegebenenfalls 35 aufweisen, die ausgewählt ist aus einem Bereich von 3 bis 15.

Die Faserbündel 38 im Randlaminat 11 können eine Anzahl an weiteren Mineralfasern 23 und gegebenenfalls 35 aufweisen, die ausgewählt ist aus einem Bereich von 3 bis 5.

Es kann weiter vorgesehen sein, dass der relative Anteil des Harzes 7 im Kernstab 10, bezogen auf den Gesamtanteil an Mineralfasern 5 gegebenenfalls 35 und Harz 7 im Kernstab, unterschiedlich ist zum relativen Anteil des weiteren Harzes 25 im Randlaminat 11, bezogen auf den Gesamtanteil an weiteren Mineralfasern 23 und gegebenenfalls 35 und weiterem Harz 25 im Randlaminat 11.

Dabei kann der relative Harzanteil im Kernstab 10 geringer sein als im Randlaminat 11. Es wird damit einerseits eine höhere Festigkeit im Kernstab 10 erreicht und andererseits u.a. die Ondulierung des Randlaminats 11 erleichtert.

E ist aber auch die umgekehrte Ausführung hinsichtlich des relativen Harzanteils möglich. Bei der bevorzugten Ausführungsvariante der Kreuzwicklung des Kernstabes 10, wie diese in Fig. 1 dargestellt ist, ist es bevorzugt, wenn ein Abstand 39 zwischen zwei in gleicher Richtung verlaufenden nebeneinander angeordneten Fadenstücken des Fadens 19 bzw. der Fäden 19 zwischen 0,1 mm und 8 mm, insbesondere zwischen 1mm und 4 mm, beträgt. Es wird damit erreicht, dass einerseits dem Kernstab 10 vor dem Härten des Harzes eine bessere Festigkeit verliehen wird und andererseits, dass der Oberflächenanteil des Harzes 7 der für die Vernetzung mit dem weiteren Harz 25 zur Verfügung steht, relativ groß ist.

Für den Fall, dass anstelle der Kreuzwicklung eine Spiralwicklung vorgesehen wird, kann der Abstand zwischen zwei nebeneinander angeordneten Fadenstücken bevorzugt ebenfalls aus diesem Bereich ausgewählt sein.

Im Bereich der Anlage des Fadens 19 bzw. der Fäden 19 am Kernstab 10 kann eine Einschnürung des Kernstabes 10 maximal 15 µm betragen. Diese Einschnürung wird durch die Wicklung des Fadens 19 bzw. der Fäden 19 im gespannten Zustand verursacht. Durch die Begrenzung der Einschnürung auf den angegebenen Maximalwert wird eine Störung des geradlinigen Verlaufs der Mineralfasern 5 und gegebenenfalls 35 im Kernstab 10 weitgehend vermieden, sodass eine Ondulierung lediglich in den Oberflächenschichten des Kernstabes 10 auftritt bzw. auftreten kann.

Die geringe Einschnürung kann durch die Abstimmung der Abzuggeschwindigkeit des Bewehrungsstabes 2 mit der oben beschriebenen Fördereinrichtung, insbesondere des Bandabzugs, auf den Spannungszustand des Fadens 19 oder der Fäden 19 erreicht werden. Gleiches gilt für die Streifen.

Die Abzuggeschwindigkeit des Bewehrungsstabes 2 mit der Fördereinrichtung kann zwischen 0,5 m/min und 12 m/min, insbesondere zwischen 1 m/min und 5 m/min, betragen.

Hinsichtlich der Spannung des Fadens 19 oder der Fäden 19 sei auf voranstehende Ausführungen verwiesen.

Eine Schichtdicke 40 des Randlaminats 11 kann zwischen 5 % und 15 % des maximalen Kernstabdurchmessers 12 entsprechen. Es wird damit erreicht, dass der Anteil an ungestört vorliegenden und linear verlaufenden Mineralfasern 5 im Kernstab 10 relativ hoch ist. Bei einer Schichtdicke 40 des Randlaminats 11 unterhalb von 5 % überträgt sich die Struktur der Wicklung des Randlaminats 11 mit dem weiteren Faden 30 zu stark bis in den Kernstab 10, insbesondere wenn dieser noch nicht vollständig ausgehärtet ist. Darüber hinaus kann damit die gewünschte Ondulierung des Randlaminats 11 negativ beeinträchtigt werden. Eine Schichtdicke des Randlaminats 11 von über 15 % bewirkt hingegen, dass bei gleichbleibendem Durchmesser des Bewehrungsstabes 2 der Kernstab 10 zu dünn wird, um die gewünschten hohen mechanischen Festigkeiten zu erreichen.

Es ist weiter bevorzugt, wenn die voranstehend beschriebene Kreuzwicklung des Kernstabes 10 mit dem Faden 19 bzw. den Fäden 19 eine geringe Schichtdicke aufweist, um eine möglichst ebenflächige Oberfläche des Kernstabes 10 für die Anordnung des Randlaminats 11 darauf zur Verfügung zu stellen.

Nach einer bevorzugten Ausführungsvariante des Verfahrens zur Herstellung des Bewehrungsstabes 2 ist vorgesehen, dass die endlosen Mineralfasern 5 und gegebenenfalls 35 und/oder 23 und gegebenenfalls 35 mit einem Harz-Härter-Gemisch versetzt werden, wobei als Harz-Härter-Gemisch ein Gemisch aus zumindest einem der voranstehend angeführten Harze und zumindest zwei unterschiedlichen Härtern verwendet wird, und wobei die beiden Härter bei unterschiedlichen Bedingungen reaktive Spezies zur Härtung des Harzes 7 und/oder weiteren Harzes 25 bilden, sodass die reaktiven Spezies zu unterschiedlichen Zeitpunkten für die Härtung zur Verfügung stehen. Vorzugsweise wird das Gemisch umfassend zumindest ein Harz und zumindest zwei unterschiedliche Härter in einem aufgebracht, wobei die zumindest zwei unterschiedlichen Härter gleichzeitig mit dem Gemisch aufgebracht werden. Das Harz-Härter-Gemisch aus Harz und zumindest zwei unterschiedlichen Härtern liegt vorzugsweise in der ersten Einrichtung 6 vor.

Insbesondere werden dazu die voranstehend angeführten Vinylesterharze verwendet.

Als Härter werden bevorzugt Peroxide eingesetzt. Vorzugsweise werden aliphatische Peroxide eingesetzt. Es können jedoch auch ausschließlich aromatischen Peroxide oder Mischungen von aliphatischen und aromatischen Peroxiden eingesetzt werden. Die Peroxide können z.B. Methyl Ethyl Keton Peroxide (MEK Peroxide) sein, die insbesondere einen niedrigen Aktivsauerstoffgehalt aufweisen.

Die Peroxide können ausgewählt sein aus einer Gruppe umfassend di(tert-Butylcyclohexyl)peroxydicarbonat, 2,5 -Dimethyl-2,5-di(tert-butylperoxy)hexan, 3,6,9-Triethyl-3,6,9,-trimethyl-1,4,7-triperoxonan, tert-Butyl peroxybenzoat, Cumolhydroperoxid, 2,5-Bis(tert-butylperoxy)-2,5-dimethylhexan sowie Mischungen daraus.

Besonders bevorzugt werden drei verschiedene Peroxide 1 bis 3 verwendet.

Das Peroxid 1 initiiert die Vernetzung des Harzes. Durch die einsetzende Reaktion können auch die chemischen Bindungen zur Faseroberfläche geschlossen werden. Durch Erhöhung der Temperatur zerfällt die Substanz in aktive Spezies, die mit dem Harz reagieren. Dabei werden die funktionellen Gruppen des Harzes in aktive Spezies umgewandelt, die wiederum mit weiteren Gruppen des Harzes reagieren. Auf diese Weise vernetzt sich das Harz schließlich selbst.

Der Anteil des Peroxids 1 an der Harz-Härter-Mischung kann zwischen 0,2 Gew.-% und 0,7 Gew.-% betragen.

Das Peroxid 2 hat dieselbe Funktion wie das Peroxid 1. Der Unterschied liegt jedoch darin, dass der Zerfall in die aktive Spezies bei höherer Temperatur als jene des Peroxids 1 erfolgt.

Der Anteil des Peroxids 2 an der Harz-Härter-Mischung kann zwischen 0,8 Gew.-% und 1,5 Gew.-% betragen.

Das Peroxid 3 hat dieselbe Funktion wie das Peroxid 1 und 2. Der Unterschied liegt jedoch darin, dass der Zerfall in die aktive Spezies bei einer höheren Temperatur als jene des Peroxids 2 erfolgt.

Der Anteil des Peroxides3 an der Harz-Härter-Mischung kann zwischen 0,7 Gew.-% und 1,8 Gew.-% betragen.

Den Rest auf 100 Gew.-% der Harz-Härter-Mischung bildet das verwendete Harz.

Die Harz-Härter-Mischung kann durch einfaches Zumischen der Härter in das jeweilige Harz bzw. die jeweilige verwendete Harzlösung hergestellt werden.

Es sei in diesem Zusammenhang darauf hingewiesen, dass die jeweiligen im Rahmen der Erfindung verwendeten Harze auch als Harzlösungen eingesetzt werden können. Der Harzanteil kann dabei zwischen 30 Gew.-% und 70 Gew.-% betragen. Der Rest auf 100 Gew.-% der Harzlösung wird durch das Lösungsmittel gebildet.

Durch den Einsatz von mehreren verschiedenen Härtern, d.h. von mehr als einem Härter, wird erreicht, dass die Reaktion, d.h. die Vernetzung des Harzes verlangsamt wird. Es kann damit vermieden werden, dass die bei der Vernetzung des Harzes frei werdende Wärme besser abgeführt werden kann bzw. die Temperaturbelastung des Kernstabes 10 und/oder des Randlaminats 11 nicht schlagartig erfolgt, wodurch eine Schädigung des Bewehrungsstabes 2, beispielsweise eine Rissbildung, vermieden werden kann.

Generell wird dabei vorzugsweise der Härter, der zuerst die reaktiven Spezies bildet, in einem Mengenanteil eingesetzt wird, der bezogen auf die jeweiligen Mengenanteile der weiteren Härter des Harz-Härter-Gemisches am geringsten ist, sodass die Vernetzung relativ langsam startet.

Es kann weiter vorgesehen werden, dass für die Herstellung des Kernstabes 10 ein zur Herstellung des Randlaminats 11 unterschiedliches Härtersystem verwendet wird, insbesondere ein Härter weniger eingesetzt wird, als in der Harz-Härter-Mischung für die Herstellung des Randlaminats 11. Mit dieser Verfahrensvariante wird die nur teilweise Vernetzung des Harzes 7 in der Einrichtung 8 zur Härtung, und damit in weiterer Folge - wie beschrieben - die Vernetzung mit dem weiteren Harz 25 des Randlaminats begünstigt.

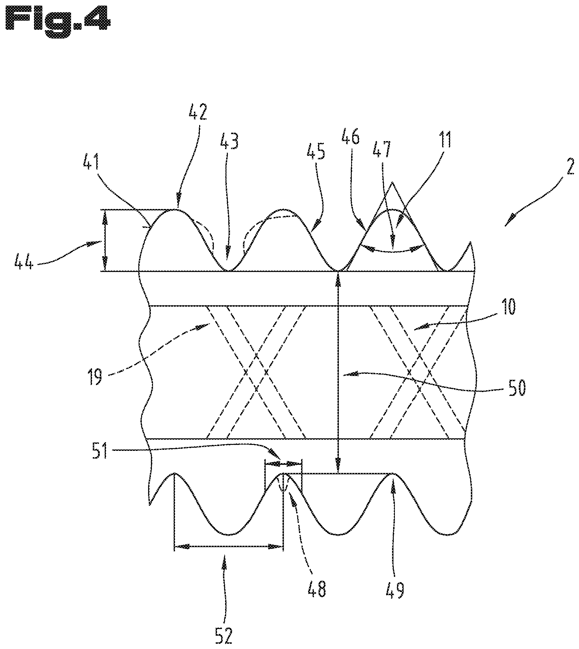

In Fig. 4 ist ein Ausschnitt aus einer Ausführungsvariante des Bewehrungsstabes 2 im Querschnitt dargestellt. Deutlich zu sehen ist der Kernstab 10 mit der ausgebildeten Kreuzwicklung mit den Fäden 19 sowie das auf dem Kernstab 10 angeordnete Randlaminat 11.

Es sei an dieser Stelle darauf hingewiesen, dass die aus den Fäden 19 bzw. den Streifen erzeugte Wicklung, insbesondere Kreuzwicklung, am Kernstab 10 verbleibt, also die Fäden 19 bzw. die Streifen nicht entfernt werden, wie dies bei dem oder den weiteren Fäden 30 bzw. weiteren Streifen der Fall ist.

An einer äußeren Oberfläche des Stabkörpers, der durch den Kernstab 10 und das Randlaminat 11 sowie die Wicklung am Kernstab 10 gebildet wird, ist eine gewindeartige Oberflächenstruktur mit Rippen 42 und Tälern 43 ausgebildet.

Die Rippen 42 weisen eine Höhe 44 von mindestens 200 µm auf. Insbesondere weisen die Rippen 42 eine Höhe 44 auf, die ausgewählt ist aus einem Bereich von 300 µm bis 3000 µm.

Die Höhe 44 wird dabei vom tiefsten Punkt der Täler 43 bis zum höchsten Punkt der Rippen 42 gemessen.

Die Höhe 44 der Rippen 42 wird über den Durchmesser des weitern Fadens 30 (Fig. 1) sowie dessen Spannung (siehe die voranstehende Beschreibung dazu) erreicht. Darüber hinaus kann die Höhe 44 der Rippen 42 auch über die Anzahl der verwendeten Mineralfasern 23 im Randlaminat 11 eingestellt werden, falls ein Randlaminat 11 am Bewehrungsstab ausgebildet bzw. angeordnet wird.

Es sei erwähnt, dass die Temperatur des Harz-Härter-Gemisches des Harzes 7 zur Herstellung des Kernstabes 10 und/oder des Randlaminats 11 ausgewählt sein kann aus einem Bereich von 15 °C bis 35 °C, insbesondere aus einem Bereich von 18 °C bis 31 °C.

Gegebenenfalls kann die Höhe 44 über die Länge des Bewehrungsstabes 2 variieren, sodass also unterschiedlich hohe Rippen 42 ausgebildet sind. Dies kann z.B. durch die Verwendung von mehreren weiteren Fäden 30 (Fig. 1) erreicht werden, die mit einer unterschiedlichen Spannung zugeführt werden.

Die Rippen 42 weisen Rippenflanken 45, 46 auf. Ein Öffnungswinkel 47, den die Rippenflanken 45, 46 einer Rippen 42 miteinander ausbilden, kann ausgewählt sein aus einem Bereich von 30° bis 120°, insbesondere aus einem Bereich von 30° bis 89°. Der Öffnungswinkel 47 kann ebenfalls über die voranstehend zur Höhe 44 der Rippen 42 genannten Parameter eingestellt werden. Zudem kann der Öffnungswinkel 47 über den Vorschub des Bewehrungsstabes 3 eingestellt werden, also über die Abzugsgeschwindigkeit. Bezüglich der Abzugsgeschwindigkeit sei auf voranstehende Ausführungen verwiesen.

Der Öffnungswinkel 47 wird wie in Fig. 4 dargestellt bestimmt.

Vorzugsweise ist die durch die Rippen 42 und Täler 43 gebildete Oberflächenstruktur des Bewehrungsstabes 2 zumindest annähernd in Form eines Rundgewindes ausgebildet.

Mit zumindest annähernd ist dabei unter anderem auch gemeint, dass die Rippenberge der Rippen 42 abgeflacht sein können, wie dies in Fig. 4 an der mittleren oberen Rippe 42 strichliert dargestellt ist.

Nach weiteren Ausführungsvarianten des Bewehrungsstabes 2 kann vorgesehen werden, dass die bezogene Rippenfläche f(_{R}), gemäß EN ISO 15630-1 ausgewählt ist aus einem Bereich mit einer unteren Grenze von 0,05 und einer oberen Grenze von 0,15 µm.

Wie in Fig. 4 strichliert dargestellt können die Rippenflanken 45, 46 zumindest bereichsweise einen konvexen Verlauf aufweisen, sodass im Bereich der Täler 43 eine Art Hinterschneidung entsteht.

Die konvexe Ausbildung der Rippenflanken 45, 46 kann dadurch erreicht werden, dass die zumindest annähernd vollständige Aushärtung des weiteren Harzes 25 verzögert wird, indem wie voranstehend beschrieben eine Härtersystem mit mehreren unterschiedlichen Härtern verwendet wird.

Es besteht auch die Möglichkeit, dass im Bereich der Täler 43 zumindest eine Erhebung 48 ausgebildet ist, wie dies in Fig. 4 ebenfalls strichliert angedeutet ist. Die Erhebung 48 kann dadurch erzeugt werden, dass anstelle eines weiteren Fadens 30 zwei oder mehrere verwendet werden, die nebeneinander, insbesondere unmittelbar nebeneinander, auf das Randlaminat 11 vor dessen Härtung aufgewickelt werden.

Ein Radius 49 einer Rundung der Täler 43 des Rundgewindes kann ausgewählt sein aus einem Bereich von 3mm bis 6 mm. Hierfür wird ein weiterer Faden 30 mit einem entsprechendem Durchmesser verwendet.

Weiter kann ein Verhältnis der Höhe 44 der Rippen 42 zu einem Durchmesser (50) des Bewehrungsstabkerns ausgewählt sein aus einem Bereich von 0,03 bis 0,2. Der Durchmesser 50 des Bewehrungsstabkerns ist der Durchmesser zwischen den Tälern 43, wie dies aus Fig. 4 ersichtlich ist.

Ein Verhältnis einer Breite 51 der Rippen 42 zu dem Durchmesser 50 des Bewehrungsstabkerns kann ausgewählt sein aus einem Bereich von 0,2 bis 0,5. Die Breite 51 der Rippen 42 wird dabei zwischen den Punkten der Rippenflanken 45, 46 gemessen, die auf 10 % der Höhe 44 der Rippen 42 liegen.

Weiter kann ein Verhältnis einer Ganghöhe 52 zu dem Durchmesser 50 des Bewehrungsstabkerns ausgewählt sein aus einem Bereich von 0,04 bis 0,8. Die Ganghöhe 52 ist dabei die Länge, die eine Rippe 42 und ein daran anschließendes Tal 43 in Richtung der Längserstreckung des Bewehrungsstabes 2 aufweisen. Gemessen kann die Ganghöhe 52 auch zwischen den tiefsten Punkten zweier nebeneinander liegender Täler 43 werden.

Wie bereits mehrfach darauf hingewiesen wurde, besteht auch die Möglichkeit, den Bewehrungsstab 2 ausschließlich aus dem Kernstab 10 zu bilden. Diese Ausführungsvariante des Bewehrungsstabes 2 wird insbesondere dann verwendet, wenn der Bewehrungsstab 2 vorgespannt in der zu verstärkenden Matrix, insbesondere Beton, eingesetzt wird. Für diese Ausführungsvariante sind sämtliche voranstehende Ausführungen betreffend den Kernstab 10 zutreffend. Allerdings weist in diesem Fall der Kernstab 10 keine auf diesem verbleibende Wicklung mit dem Faden 19 oder Streifen auf. Stattdessen erfolgt die Wicklung mit dem weiteren Faden 30 oder weiteren Streifen zur Herstellung der gewünschten Oberflächenstruktur, wie dies zum Randlaminat 11 ausgeführt wurde.

Es besteht auch bei dieser Ausführungsvariante die Möglichkeit, dass auf den Kernstab 10 nach Ausformung der Oberflächenstruktur, insbesondere der rundgewindeähnlichen Oberflächenstruktur, ein Finishing aus einer dünnen Harzschicht aufgebracht wird, wie dies ebenfalls voranstehend ausgeführt wurde.

Es wurden Versuchsstücke des Bewehrungsstabs 2 hergestellt und an diesen Messungen von mechanischen Eigenschaften durchgeführt. Es wurde dabei gemessen, dass eine "mittlere Verbundspannung" nach ISO 10406 - 1 zumindest 20 MPa beträgt. Vergleichsmessungen an Bewehrungsstäben nach dem Stand der Technik ergaben hingegeben unter gleichen Bedingungen einen Wert für die mittlere Verbundspannung von unter 15 MPa.

Weiter wurde die Zugfestigkeit des Bewehrungsstabes 2 nach der Erfindung mit über 1740 MPa und der E-Modul mit über 65 GPa bestimmt. Bewehrungsstäbe nach dem Stand der Technik erreichten hingegen unter gleichen Bedingungen nur eine Zugfestigkeit zwischen 900 MPa und 1375 MPa sowie ein E-Modul zwischen 46 GPa und 63 GPa.

Die Ausführungsbeispiele zeigen mögliche Ausführungsvarianten des Bewehrungsstabes 2 bzw. der Anlage 1 zur Herstellung des Bewehrungsstabes 2, wobei an dieser Stelle bemerkt sei, dass auch diverse Kombinationen der einzelnen Ausführungsvarianten untereinander möglich sind.

Der Ordnung halber sei abschließend darauf hingewiesen, dass zum besseren Verständnis des Aufbaus des Bewehrungsstabes 2 bzw. der Anlage 1 diese bzw. deren Bestandteile teilweise unmaßstäblich und/oder vergrößert und/oder verkleinert dargestellt wurden.

**Bezugszeichenaufstellung**

| | | | |
|---|---|---|---|
| 1 | Anlage | 36 | Einrichtung |
| 2 | Bewehrungsstab | 37 | Faserbündel |
| 3 | Pfeil | 38 | Faserbündel |
| 4 | Einrichtung | 39 | Abstand |
| 5 | Mineralfaser | 40 | Schichtdicke |
| | | | |
| 6 | Einrichtung | 41 | Oberfläche |
| 7 | Harz | 42 | Rippe |
| 8 | Einrichtung | 43 | Tal |
| 9 | Spulen | 44 | Höhe |
| 10 | Kernstab | 45 | Rippenflanke |
| | | | |
| 11 | Randlaminat | 46 | Rippenflanke |
| 12 | Kernstabdurchmesser | 47 | Öffnungswinkel |
| 13 | Rolle | 48 | Erhebung |
| 14 | Harzbadoberfläche | 49 | Radius |
| 15 | Abstreifvorrichtung | 50 | Durchmesser |
| | | | |
| 16 | Lochscheibe | 51 | Breite |
| 17 | Bohrung | 52 | Ganghöhe |
| 18 | Einrichtung | | |
| 19 | Faden | | |
| 20 | Winkel | | |
| | | | |
| 21 | Spule | | |
| 22 | Einrichtung | | |
| 23 | Mineralfaser | | |
| 24 | Einrichtung | | |
| 25 | Harz | | |
| | | | |
| 26 | Abstreifeinrichtung | | |
| 27 | Einrichtung | | |
| 28 | Wickeleinrichtung | | |
| 29 | Spule | | |
| 30 | Faden | | |
| | | | |
| 31 | Abwickeleinrichtung | | |
| 32 | Spule | | |
| 33 | Sägeeinrichtung | | |
| 34 | Einrichtung | | |
| 35 | Mineralfaser | | |

## Patentansprüche

1. Verfahren zur Herstellung eines Bewehrungsstabes (2) aus einem Faserverbundwerkstoff aus endlosen Mineralfasern (5, 23, 35) und zumindest einem Harz (7, 25), wobei zumindest ein Teil der Mineralfasern (5, 23) mit einem Harz-Härter-Gemisch versetzt wird und danach die mit dem Harz-Härter-Gemisch versetzten Mineralfasern (5, 23) und gegebenenfalls harzfreien Mineralfasern (35) zu einem Stab zusammengeführt werden und das Harz (7, 25) gehärtet wird, wobei als Harz-Härter-Gemisch ein Gemisch aus zumindest einem Harz (7, 25) und zumindest zwei unterschiedlichen Härtern verwendet wird, wobei die beiden Härter bei unterschiedlichen Bedingungen reaktive Spezies zur Härtung des Harzes (7, 25) bilden, sodass die reaktiven Spezies zu unterschiedlichen Zeitpunkten für die Härtung zur Verfügung stehen, **dadurch gekennzeichnet, dass** aus den Mineralfasern (5, 35) und dem Harz (7) ein Kernstab (10) hergestellt wird, der in weiterer Folge mit einem Randlaminat (11) aus Mineralfasern (23, 35) und einem weiteren Harz (25) versehen wird, wobei für die Herstellung des Kernstabes (10) ein zur Herstellung des Randlaminats (11) unterschiedliches Härtersystem verwendet wird, insbesondere ein Härter weniger eingesetzt wird, als in der Harz-Härter-Mischung für die Herstellung des Randlaminats (11).

2. Verfahren nach Anspruch 1, **dadurch gekennzeichnet, dass** die Härter ausgewählt werden aus einer Gruppe umfassend oder bestehend aus Diisocyanaten und Radikalbildner, insbesondere Peroxide, Azoverbindungen, Fotoinitiatoren, sowie Mischungen daraus.

3. Verfahren nach Anspruch 1 oder 2, **dadurch gekennzeichnet, dass** als Härter drei verschiedene Peroxide verwendet werden.

4. Verfahren nach einem der Ansprüche 1 bis 3, **dadurch gekennzeichnet, dass** der Härter, der zuerst die reaktiven Spezies bildet, in einem Mengenanteil eingesetzt wird, der bezogen auf die jeweiligen Mengenanteile der weiteren Härter des Harz-Härter Gemisches am geringsten ist.

5. Verwendung eines Harz-Härter-Gemisches umfassend zumindest ein Harz (7, 25) und zumindest zwei unterschiedliche Härter, wobei die beiden Härter bei unterschiedlichen Bedingungen reaktive Spezies zur Härtung des Harzes (7, 25) bilden, sodass die reaktiven Spezies zu unterschiedlichen Zeitpunkten für die Härtung zur Verfügung stehen, zur Herstellung eines Kernstabes eines Bewehrungsstabes (2) aus Mineralfasern (5, 23, 35) umfassend den Kernstab, wobei der Kernstab in weiterer Folge mit einem Randlaminat (11) aus Mineralfasern (23, 35) und einem weiteren Harz (25) versehen wird, wobei für die Herstellung des Kernstabes (10) ein zur Herstellung des Randlaminats (11) unterschiedliches Härtersystem verwendet wird, insbesondere ein Härter weniger eingesetzt wird, als in der Harz-Härter-Mischung für die Herstellung des Randlaminats (11).

6. Verwendung nach Anspruch 5, **dadurch gekennzeichnet, dass** die Härter ausgewählt sind aus einer Gruppe umfassend oder bestehend aus Diisocyanaten und Radikalbildner, insbesondere Peroxide, Azoverbindungen, Fotoinitiatoren, sowie Mischungen daraus.

7. Verwendung nach Anspruch 5 oder 6, **dadurch gekennzeichnet, dass** als Härter drei verschiedene Peroxide verwendet werden.

8. Verwendung nach einem der Ansprüche 5 bis 7, **dadurch gekennzeichnet, dass** der mengenbezogene Anteil des Härters, der zuerst die reaktiven Spezies bildet, bezogen auf die jeweiligen Mengenanteile der weiteren Härter an der Harz-Härter-Mischung am geringsten ist.

## Claims

1. Method for producing a reinforcement rod (2) from a fibre composite material consisting of endless mineral fibres (5, 23, 35) and at least one resin (7, 25), wherein at least a part of the mineral fibres (5, 23) is mixed with a resin-curing agent mixture and the mineral fibres (5, 23) which have been mixed with the resin-curing agent mixture and optionally resin-free mineral fibres (35) are then brought together to form a rod and the resin (7, 25) is cured, wherein a mixture of at least one resin (7, 25) and at least two different curing agents is used as the resin-curing agent mixture, wherein the two curing agents form reactive species for curing the resin (7, 25) under different conditions, such that the reactive species are available for the curing process at different times, **characterized in that** a core rod (10) is produced from the mineral fibres (5, 35) and the resin (7), which core rod is subsequently furnished with a peripheral laminate (11) of mineral fibres (23, 35) and a further resin (25), wherein a different curing agent system is used for producing the core rod (10) than that used for producing the peripheral laminate (11), in particular one less curing agent is used than in the resin-curing agent mixture for producing the peripheral laminate (11).

2. Method according to claim 1, **characterized in that** the curing agents are selected from a group comprising or consisting of diisocyanates and radical formers, in particular peroxides, azo compounds, photoinitiators, and mixtures thereof.

3. Method according to claim 1 or 2, **characterized in that** three different peroxides are used as curing agents.

4. Method according to any one of claims 1 to 3, **characterized in that** the first curing agent to form the reactive species is used in a proportion which is the lowest relative to the respective proportions of the other curing agents in the resin-curing agent mixture.

5. Use of a resin-curing agent mixture comprising at least one resin (7, 25) and at least two different curing agents, wherein the two curing agents form reactive species for curing the resin (7, 25) under different conditions, such that the reactive species are available for the curing process at different times in order to produce a core rod of a reinforcement rod (2) made of mineral fibres (5, 23, 35) comprising the core rod, wherein the core rod is subsequently furnished with a peripheral laminate (11) of mineral fibres (23, 35) and a further resin (25), wherein a different curing agent system is used for producing the core rod (10) than that used for producing the peripheral laminate (11), in particular one less curing agent is used than in the resin-curing agent mixture for producing the peripheral laminate (11).

6. Use according to claim 5, **characterized in that** the curing agents are selected from a group comprising or consisting of diisocyanates and radical formers, in particular peroxides, azo compounds, photoinitiators, and mixtures thereof.

7. Use according to claim 5 or 6, **characterized in that** three different peroxides are used as curing agents.

8. Use according to any one of claims 5 to 7, **characterized in that** the quantitative proportion of the first curing agent to form the reactive species is the lowest relative to the respective proportions of the other curing agents in the resin-curing agent mixture.

## Revendications

1. Procédé de fabrication d'une barre d'armature (2) à partir d'un matériau composite à fibres constitué de fibres minérales sans fin (5, 23, 35) et d'au moins une résine (7, 25), au moins une partie des fibres minérales (5, 23) étant ajoutées à un mélange résine-durcisseur puis les fibres minérales (5, 23) ajoutées au mélange résine-durcisseur et, le cas échéant, les fibres minérales (35) sans résine, sont regroupées en une barre et la résine (7, 25) est durcie, le mélange résine-durcisseur utilisé étant un mélange constitué d'au moins une résine (7, 25) et d'au moins deux durcisseurs différents, les deux durcisseurs formant, dans des conditions différentes, des espèces réactives pour le durcissement de la résine (7, 25), de façon à ce que les espèces réactives soient disponibles à des moments différents pour le durcissement, **caractérisé en ce que**, à partir des fibres minérales (5, 35) et de la résine (7), une barre centrale (10) est fabriquée, qui est ensuite munie d'un stratifié de bord (11) en fibres minérales (23, 35) et d'une autre résine (25), moyennant quoi, pour la fabrication de la barre centrale (10), on utilise un système de durcisseur différent de celui utilisé pour la fabrication du stratifié de bord (11), plus particulièrement on utilise un durcisseur de moins que dans le mélange résine-durcisseur pour la fabrication du stratifié de bord (11).

2. Procédé selon la revendication 1, **caractérisé en ce que** les durcisseurs sont sélectionnés dans un groupe comprenant ou constitué de diisocyanates et de générateurs de radicaux, plus particulièrement des peroxydes, des composés azoïques, des photo-initiateurs ainsi que des mélanges de ceux-ci.

3. Procédé selon la revendication 1 ou 2, **caractérisé en ce que**, en tant que durcisseurs, trois peroxydes différents sont utilisés.

4. Procédé selon l'une des revendications 1 à 3, **caractérisé en ce que** le durcisseur qui forme en premier les espèces réactives est intégré dans une proportion qui est la plus faible par rapport aux proportions des autres durcisseurs du mélange résine-durcisseur.

5. Utilisation d'un mélange résine-durcisseur comprenant au moins une résine (7, 25) et au moins deux durcisseurs différents, les deux durcisseurs formant, dans des conditions différentes, des espèces réactives pour le durcissement de la résine (7, 25), de façon à ce que les espèces réactives soient disponibles à des moments différents pour le durcissement, pour la fabrication d'une barre centrale d'une barre d'armature (2) en fibres minérales (5, 23, 35) comprenant la barre centrale, la barre centrale étant ensuite munie d'un stratifié de bord (11) en fibres minérales (23, 35) et d'une autre résine (25), moyennant quoi, pour la fabrication de la barre centrale (10), on utilise un système de durcisseur de celui utilisé pour la fabrication du stratifié de bord (11), plus particulièrement on utilise un durcisseur de moins que dans le mélange résine-durcisseur pour la fabrication du stratifié de bord (11).

6. Utilisation selon la revendication 5, **caractérisée en ce que** les durcisseurs sont sélectionnés dans un groupe comprenant ou constitué de diisocyanates et de générateurs de radicaux, plus particulièrement des peroxydes, des composés azoïques, des photo-initiateurs ainsi que des mélanges de ceux-ci.

7. Utilisation selon la revendication 5 ou 6, **caractérisée en ce que**, en tant que durcisseurs, trois peroxydes différents sont utilisés.

8. Utilisation selon l'une des revendications 5 à 7, **caractérisée en ce que** la proportion du durcisseur qui forme en premier les espèces réactives est la plus faible par rapport aux proportions des autres durcisseurs dans le mélange résine-durcisseur.
